# EUROPEAN PATENT APPLICATION

(11) **EP 2 006 607 A2**
(43) Date of publication of application: **24.12.2008**
(21) Application number: 08252080.0
(22) Date of filing: 17.06.2008
(51) Int. Cl.: F24D 3/08, F24D 3/10, F24D 12/02, F24D 19/10

(54) **Improvements in and relating to water heating**

(30) Priority: 19.06.2007 GB 0711844; 01.11.2007 GB 0721483
(71) Applicant: Ravenheat Manufacturing Limited, Leeds, West Yorkshire LS27 9ET (GB)
(72) Inventor: Pickersgill, Louis, Leeds, LS27 9ET (GB)
(74) Representative: Pawlyn, Anthony Neil

(57) **Abstract**

A water heating system is provided, the water heating system including: a burner unit, the burner unit having an exhaust gas outlet, the exhaust gas outlet passing through a heat exchanger; and a hot water storage tank, the hot water storage tank being in a heat transfer circuit with the exhaust gases of the heat exchanger. The configuration allows the recovery of useful heat from the exhaust gases to heat water. The water can be used for hot water supply and/or space heating. The hot water storage tank may be separate from or an integral part of the same unit as the burner unit.

## Description

This invention is concerned with improvements in and relating to water heating.

Water is heated in many situations, including in a domestic environment to provide a source of hot water for washing and other purposes. To do so, fuel is burnt and the heat generated by the flame is used directly to heat passages containing water and so generate hot water.

There are problems with the efficiency of such an approach to the heating of water.

The present invention has amongst its possible aims to provide more hot water for a given amount of fuel burnt. The present invention has amongst its possible aims to recover extra heat from the exhaust gases of the combustion process. The present invention has amongst its aims to store a body of hot water heated using the exhaust gases.

According to a first aspect of the invention there is provided a water heating system, the water heating system including:
a burner unit, the burner unit having an exhaust gas outlet, the exhaust gas outlet passing through a heat exchanger;
a hot water storage tank, the hot water storage tank being in a heat transfer circuit with the exhaust gases of the heat exchanger.

The first aspect of the invention may include any of the options, features or possibilities set out elsewhere within this document, including those of the other aspects of the invention and the options, features and possibilities provided therefor.

The first aspect may provided that the heat transfer circuit includes the hot water storage tank having a water outlet passage leading to a heat transfer passage in the heat exchanger, the heat transfer passage leading to a water inlet in the hot water storage tank.

The first aspect may provided that the heat exchanger is at least partially within the hot water storage tank.

According to a second aspect of the invention there is provided a water heating system, the water heating system including:
a burner unit, the burner unit having an exhaust gas outlet, the exhaust gas outlet passing through a heat exchanger;
a hot water storage tank, the hot water storage tank having a water outlet passage leading to a heat transfer passage in the heat exchanger, the heat transfer passage leading to a water inlet in the hot water storage tank.

The second aspect of the invention may include any of the options, features or possibilities set out elsewhere within this document, including those of the other aspects of the invention and the options, features and possibilities provided therefor.

The water heating system may be connected to one or more outlets. The water heating system may be connected to one or more sinks, baths or showers. The hot water storage tank may be connected to the one or more outlets directly or via the burner unit.

The burner unit may be provided within a boiler.

The burner unit may be provided with a cold water inlet. The cold water inlet may be connected to the hot water storage tank. A pump may be provided between the hot water storage tank and the burner unit. The burner unit may be provided with a hot water outlet. The hot water outlet may be connected to the hot water storage tank and/or to one or more outlets, for instance one or more sinks, baths or showers.

The connection between the cold water inlet and the hot water storage tank may be provided below the connection between the hot water outlet and the hot water storage tank. A temperature monitor, for instance a thermostat, may be provided in contact with the hot water storage tank. Preferably the contact is provided above the connection between the cold water inlet and the hot water storage tank. Preferably the contact is provided below the connection between the hot water outlet and the hot water storage tank.

Preferably when the temperature monitored by the temperature monitor is below a threshold value, water flows from the hot water storage tank to the burner unit. The water may be heating by the burner unit. Preferably when the temperature monitored by the temperature monitor is below a threshold value, water flows from the burner unit to the hot water storage tank.

Preferably when water flows from one or more of the outlets from the water heating system, water flows from the hot water storage tank to the burner unit.

The water outlet from the hot water storage tank, heat transfer passage in the heat exchanger and water inlet to the hot water storage tank may form a water heating circuit. The water inlet to the hot water storage tank and water outlet from the hot water storage tank may be connected to one another by a water tank heat transfer passage provided within the hot water storage tank. The water tank heat transfer passage may be a helical passage. The water heating circuit may be closed. The water heating circuit may be a vented or open. The water heating circuit may be a secondary water heating circuit, preferably with a primary water heating circuit provided by the cold water inlet which leads from the hot water storage tank to the burner unit and the hot water outlet which leads from the burner unit to the hot water storage tank.

A pump may be provided as a part of the water heating circuit and/or between the hot water storage tank and the heat transfer passage in the heat exchanger and/or in the water outlet passage leading to the heat transfer passage. An expansion vessel may be provided as a part of the water heating circuit and/or between the heat transfer passage in the heat exchanger and the hot water storage tank and/or in the water inlet passage leading from the heat transfer passage. A safety valve may be provided as a part of the water heating circuit and/or between the heat transfer passage in the heat exchanger and the hot water storage tank and/or in the water inlet passage leading from the heat transfer passage. A filling point, for instance a valve, may be provided as a part of the water heating circuit and/or between the heat transfer passage in the heat exchanger and the hot water storage tank and/or in the water inlet passage leading from the heat transfer passage.

The water outlet leading to the heat exchanger from the hot water storage tank is preferably provided below the water inlet leading from the heat exchanger to the hot water storage tank. Preferably the water outlet leading to the heat exchanger from the hot water storage tank is provided below the cold water inlet leading to the burner unit and/or below the hot water outlet leading from the burner unit to the hot water storage tank. Preferably the water outlet leading from the heat exchanger to the hot water storage tank is provided below the cold water inlet leading to the burner unit and/or below the hot water outlet leading from the burner unit to the hot water storage tank.

The hot water storage tank may be provided with a cold water feed inlet. The cold water feed inlet may be connected to the mains water supply. It may be so connected directly or via a header tank. The cold water feed inlet to the hot water storage tank is preferably provided below the cold water inlet leading to the burner unit and/or below the hot water outlet leading to the hot water storage tank and/or below the water outlet leading to the heat exchanger and/or below the water inlet leading from the heat exchanger. Water may flow into the hot water storage tank through the cold water feed inlet when water is removed from the water heating system via one or more of the outlets, for instance at one or more sinks, baths or showers.

The heat exchanger may be provided above the burner unit. The exhaust gas outlet may lead from the burner unit, through the heat exchanger and out to the atmosphere external to a building in which the system is used.

The heat exchanger may comprise a plurality of plates arranged in a stack, the plates having chambers extending along their length within the plates in which the fluid, preferably water, to be heated can flow. The heat exchanger may further comprise a baffle plate positioned towards the centre of the plates and orientated substantially at right angles to the plates to divide the heat exchanger into two parts. The heat exchanger may be provided with spacers by which adjacent plates in the stack are held apart, to define spaces along which the exhaust gases can flow so as to exchange heat with the fluid to be heated through the walls of the plates. The baffle plate may divide the passage through the heat exchanger, thereby forcing gases in one direction towards the plates on entry, with that direction then being reversed before the exhaust gases can exit the heat exchanger.

The heat exchanger may comprise a passage through which water passes and around which the exhaust gases pass. One or more such passages may be provided within the heat exchanger. One or more passages having a convoluted passage may be provided. One or more helical or coiled passageways may be provided.

The heat transfer passage in the heat exchanger preferably provides for the passage of heat from the hot exhaust gases to the cooler water.

The heat exchanger may be provided with a collector for water condensing from the exhaust gases. The collector may be connected to the hot water storage tank. An acidity regulator may be provided in conjunction with the collector.

The water heating system may also be a space heating system. The space heating system may be used to heat air within a building. The water circulation circuit for the space heating system may be separate to the water circuit for the water heating system. The space heating system may include a burner unit provided with a space heating system cold water inlet. The space heating system may include a burner unit provided with a space heating system hot water outlet.

The space heating system may include a burner unit connected to a space heating system cold water inlet passage, particularly via a space heating system cold water inlet. The space heating system cold water inlet passage may be connected to one or more radiators. The space heating system may include a burner unit connected to a space heating system hot water outlet passage, particularly via a space heating system hot water outlet. The space heating system hot water outlet passage may be connected to one or more radiators. The space heating system cold water inlet passage, space heating system hot water outlet passage and one or more radiators may provide a space heating circuit. The space heating circuit may be connected to a water supply, for instance through a filling point. The filling point may be a valve. A drainage point may be provided, for instance a drain tap. A by-pass may be provided for one or more or all of the radiators. The space heating circuit may be a closed circuit.

The heat transfer passage in the heat exchanger may be kept full of water. However, a pump may be provided, together with a controller, the pump being activated to provide water to the heat transfer passage and/or remove water from the heat transfer passage. The pump may be deactivated to allow water to drain under gravity from the heat transfer passage. The pump may be activated to provide water when exhaust gases are passing through the heat exchanger and/or when the exhaust gases passing through the heat exchanger are above a temperature level.

The hot water storage tank and burner unit may be provided within a single casing. The hot water storage tank may store water only generated by the heat exchanger. The hot water storage tank may store water generated by the heat exchanger and/or the burner unit.

The system may include a further water heating circuit. The further water heating circuit may include a water outlet from the hot water storage tank leading to one or more solar panels and a water inlet leading from the one or more solar panels to the hot water storage tank. The water inlet to the hot water storage tank may be common between the one or more solar panels and the heat exchanger. The water outlet from the hot water storage tank may be common between the one or more solar panels and the heat exchanger.

A pump may be provided as a part of the further water heating circuit and/or between the hot water storage tank and the one or more solar panels. An expansion vessel may be provided as a part of the further water heating circuit and/or between the one or more solar panels and the hot water storage tank. A safety valve may be provided as a part of the further water heating circuit and/or between the one or more solar panels and the hot water storage tank.

The water outlet leading to the one or more solar panels from the hot water storage tank is preferably provided below the water inlet leading from the one or more solar panels to the hot water storage tank. Preferably the water outlet leading to the one or more solar panels is provided below the cold water inlet leading to the burner unit and/or below the hot water outlet leading from the burner unit to the hot water storage tank. Preferably the water outlet leading from the one or more solar panels to the hot water storage tank is provided below the cold water inlet leading to the burner unit and/or below the hot water outlet leading from the burner unit to the hot water storage tank.

Where the hot water storage tank is provided with a cold water feed inlet, the cold water feed inlet to the hot water storage tank is preferably provided below the water outlet leading to the one or more solar panels and/or below the water inlet leading from the one or more solar panels.

The cold water feed to the hot water storage tank may be connected to the hot water storage tank through the heat exchanger. The cold water feed is preferably connected to the hot water storage tank at the bottom of the hot water storage tank. The cold water feed to the hot water storage tank may be directed through the heat exchanger by a valve. The valve may be provided according to the ninth aspect of the invention. The valve may inhibit and/or prevent the flow of water from the cold water feed to the hot water storage tank without passing through the heat exchanger.

The valve may have a first state which allows the connection of the cold water feed to the hot water storage tank through the heat exchanger.

The water outlet leading from the hot water storage tank to the heat exchanger is preferably connected at the bottom of the hot water storage tank. The water inlet leading from the heat exchanger to the hot water storage tank is preferably connected to the hot water storage tank above the water outlet and/or at the top of the hot water storage tank. Preferably the valve is provided between the heat exchanger and the water inlet.

Preferably the cold water feed is connected to the water inlet leading from the heat exchanger to the hot water storage tank between the heat exchanger and the valve.

The valve may have a second state which allows the connection of the water outlet to the water inlet through the heat exchanger.

The hot water storage tank may be provided above the heat exchanger, for instance mounted thereon or on the casing therefore.

The water inlet leading from the heat exchanger to the hot water storage tank is preferably, at least in part, a common passage with the hot water outlet from the hot water storage tank to the locations of use. The hot water outlet may separate from the water inlet between the valve and the hot water storage tank.

The hot water storage tank may be provided with a second tank, preferably a second water tank. The second tank is preferably entirely within the hot water storage tank. The second tank is preferably in contact with water contained within the hot water storage tank and more preferably is surrounded thereby.

The second tank is preferably connected by a pipe to the space heating system. Preferably the pipe allows expansion and contraction of the water in the second tank to be accommodated within the space heating system.

The second tank may be provided in the lower part of the hot water storage tank, for instance in the bottom half by height or volume. The second tank may be provided in the lower third by height or volume.

The second tank may have a maximum extent which extends for at least 50% of the length and/or width of the hot water storage tank's extent at the same height. The extent may be at least 70%, more preferably at least 80%, length and/or width.

The hot water storage tank may be connected to the boiler to receive heated water therefrom. The hot water storage tank may be connected to the heat exchanger to receive heated water therefrom. The hot water storage tank may receive heat from the second tank.

Cold water may be introduced to the bottom of the hot water storage tank. Hot water may be removed from the top of the hot water storage tank. Heated water from the heat exchanger may be introduced to the upper part and/or top of the hot water storage tank. Cooler water for feeding to the heat exchanger may be removed from the lower part and/or bottom of the hot water storage tank.

A pump may be provided. The pump may circulate water through the heat exchanger and hot water storage tank. The pump may circulate water during the heating mode, and preferably only during the heating mode. The water outlet leading from the hot water storage tank to the heat exchanger is preferably connected at the top of the hot water storage tank. The water inlet leading from the heat exchanger to the hot water storage tank is preferably connected to the hot water storage tank below the water outlet and/or at the bottom of the hot water storage tank. Preferably the valve is provided between the heat exchanger and the water inlet. The pump is preferably provided between the heat exchanger and the hot water storage tank, most preferably the inlet thereto.

Preferably the cold water feed is connected to the water inlet leading from the hot water storage tank to the heat exchanger between the hot water storage tank and the valve. The cold water fed may be connected above the heat exchanger.

The valve may have a second state which allows the connection of the water outlet to the water inlet through the heat exchanger. Preferably the second state of the valve allows water to flow from the cold water feed through the heat exchanger to the hot water storage tank. Preferably the flow is from top to bottom through the heat exchanger.

Preferably the flow through the heat exchanger and/or through the hot water storage tank is in the same direction in the heating mode and in the hot water mode.

The water inlet leading from the hot water storage tank to the heat exchanger is preferably, at least in part, a common passage with the hot water outlet from the hot water storage tank to the locations of use.

According to a third aspect of the invention there is provided a water heating system, the water heating system including:
a burner unit, the burner unit having an exhaust gas outlet, the exhaust gas outlet passing through a heat exchanger;
a hot water storage tank, the heat exchanger being at least partially within the hot water storage tank.

The third aspect of the invention may include any of the options, features or possibilities set out elsewhere within this document, including those of the other aspects of the invention and the options, features and possibilities provided therefor.

The water heating system may be connected to one or more outlets. The water heating system may be connected to one or more sinks, baths or showers. The hot water storage tank may be connected to the one or more outlets directly or via the burner unit.

The burner unit may be provided within a boiler.

The burner unit may be provided with a cold water inlet. The burner unit may be provided with a hot water outlet. The hot water outlet may be connected to the hot water storage tank and/or to one or more outlets, for instance one or more sinks, baths or showers.

Preferably when water flows from one or more of the outlets from the water heating system, water flows through the burner unit.

The hot water storage tank and burner unit may be provided within a single casing. The hot water storage tank may store water only generated by the heat exchanger. The hot water storage tank may store water generated by the heat exchanger and/or the burner unit.

The heat exchanger may be provided within the hot water storage tank. The water of the hot water storage tank may be provided in contact with the bottom of the heat exchanger. The water of the hot water storage tank may be provided in contact with one or more or all of the sides of the heat exchanger. The water of the hot water storage tank may be provided in contact with the top of the heat exchanger. The hot water storage tank, and preferably the water there of, may be provided around the entire heat exchanger.

The exhaust gas outlet from the boiler may pass through a wall of the hot water storage tank to the heat exchanger. The exhaust gas outlet from the heat exchanger may pass through a wall of the hot water tank. The exhaust gas outlet may be in contact with or be surrounded by the water of the hot water storage tank for part of its path.

The hot water storage tank may be provided with a hot water outlet. The hot water outlet may be connected to one or more outlets, such as sinks, baths or showers. The hot water outlet is preferably provided in the upper half of the hot water storage tank, and more preferably in the top 15% thereof. The hot water storage tank may be provided with a cold water feed inlet. The cold water feed inlet may be directly or indirectly connected to the mains water supply. The cold water feed inlet is preferably provided in the lower half of the hot water storage tank, and more preferably in the bottom 15% thereof.

The water of the hot water storage tank is preferably heated during water heating mode for the burner unit and during space heating mode for the burner unit.

Preferably hot water rises through the chambers extending through the heat exchanger. Preferably cold water sinks around the periphery of the hot water storage tank and/or heat exchanger.

The heat exchanger may be provided above the burner unit. The heat exchanger may be provided below the burner unit. The heat exchanger may be provided alongside the burner unit. The exhaust gas outlet may lead from the burner unit, through the heat exchanger and out to the atmosphere external to a building in which the system is used.

The heat exchanger may comprise a plurality of plates arranged in a stack, the plates having chambers extending along their length within the plates in which the fluid, preferably water, to be heated can flow. The heat exchanger may further comprise a baffle plate positioned towards the centre of the plates and orientated substantially at right angles to the plates to divide the heat exchanger into two parts. The heat exchanger may be provided with spacers by which adjacent plates in the stack are held apart, to define spaces along which the exhaust gases can flow so as to exchange heat with the fluid to be heated through the walls of the plates. The baffle plate may divide the passage through the heat exchanger, thereby forcing gases in one direction towards the plates on entry, with that direction then being reversed before the exhaust gases can exit the heat exchanger.

It is preferred that the water containing chambers have an axis and that the axis has a vertical component. Preferably the axis of the chambers extends substantially vertically, for instance at greater than 60° to the horizontal.

The heat exchanger may comprise a passage through which water passes and around which the exhaust gases pass. One or more such passages may be provided within the heat exchanger. One or more passages having a convoluted passage may be provided. One or more helical or coiled passageways may be provided.

The heat transfer passage in the heat exchanger preferably provides for the passage of heat from the hot exhaust gases to the cooler water.

The heat exchanger may be provided with a collector for water condensing from the exhaust gases. The collector may be connected to the hot water storage tank. An acidity regulator may be provided in conjunction with the collector.

An expansion vessel may be provided as a part of the water heating circuit and/or between the heat exchanger and the space heating system and/or between the hot water storage tank and the space heating system. The same expansion vessel may be provided to accommodate expansion within the heat exchanger and the hot water storage tank, as accommodates expansion within the space heating system. A safety valve may be provided as a part of the water heating circuit. A filling point, for instance a valve, may be provided as a part of the water heating circuit.

The water heating system may also be a space heating system. The space heating system may be used to heat air within a building. The water circulation circuit for the space heating system may be separate to the water circuit for the water heating system. The space heating system may include a burner unit provided with a space heating system cold water inlet. The space heating system may include a burner unit provided with a space heating system hot water outlet.

The space heating system may include a burner unit connected to a space heating system cold water inlet passage, particularly via a space heating system cold water inlet. The space heating system cold water inlet passage may be connected to one or more radiators. The space heating system may include a burner unit connected to a space heating system hot water outlet passage, particularly via a space heating system hot water outlet. The space heating system hot water outlet passage may be connected to one or more radiators. The space heating system cold water inlet passage, space heating system hot water outlet passage and one or more radiators may provide a space heating circuit. The space heating circuit may be connected to a water supply, for instance through a filling point. The filling point may be a valve. A drainage point may be provided, for instance a drain tap. A by-pass may be provided for one or more or all of the radiators. The space heating circuit may be a closed circuit.

The system may include a further water heating circuit. The further water heating circuit may include a water outlet from the hot water storage tank leading to one or more solar panels and a water inlet leading from the one or more solar panels to the hot water storage tank.

A pump may be provided as a part of the further water heating circuit and/or between the hot water storage tank and the one or more solar panels. An expansion vessel may be provided as a part of the further water heating circuit and/or between the one or more solar panels and the hot water storage tank. A safety valve may be provided as a part of the further water heating circuit and/or between the one or more solar panels and the hot water storage tank.

The water outlet leading to the one or more solar panels from the hot water storage tank is preferably provided below the water inlet leading from the one or more solar panels to the hot water storage tank.

A cold water feed pre-heating circuit may be provided. This may take the whole or part of the cold water form the mains supply to the system and pre-heat it before it is passed to the burner unit. The cold water feed pre-heating circuit may include a further heat exchanger. The further heat exchanger may be provided with a cold water feed inlet and a pre-heated cold water outlet. The pre-heated cold water outlet may be connected to the cold water feed to the burner unit. The further heat exchanger may be provided within the hot water storage tank. The further heat exchanger is preferably provided in the upper part, for instance upper third of the hot water tank. The further heat exchanger may be provided above the heat exchanger. The further heat exchanger may be in the form of a coil or helix. The further heat exchanger may be a plate type heat exchanger. The further heat exchanger may promote water circulation in the hot water storage tank and/or through the heat exchanger, for instance by cooling the upper part of the hot water storage tank.

The water heating system may provide water to the space heating system from the hot water storage tank. The water heating system may only provide water to the space heating system from the hot water storage tank when the temperature of the water within the hot water storage tank, and/or at a location therein, is above a threshold value. The water may be supplied to the space heating system through a heating system hot water outlet. The space heating system hot water outlet may be provided in the upper half of the hot water storage tank, and more preferably in the top 15% thereof. The water may be returned from the space heating systems to the hot water storage tank through a heating system hot water inlet. The heating system hot water inlet may be provided in the lower half of the hot water storage tank, and more preferably in the bottom 15% thereof.

The exhaust gas outlet from the boiler may pass through a wall of the hot water storage tank to the heat exchanger. The exhaust gas outlet from the heat exchanger may pass through a wall of the hot water tank. The exhaust gas outlet may be in contact with or be surrounded by the water of the hot water storage tank for part of its path.

The combustion air for the burner unit may reach the burner unit by an air inlet passage. The air inlet passage may be in thermal contact with the exhaust gases and/or with the water of the hot water storage tank. The air inlet passage may be in thermal contact with the exhaust gases by providing part of the exhaust gas outlet in contact with the air inlet passage. The air inlet passage may be provided within the exhaust gas outlet over at least a part of its length, or more preferably the exhaust gas outlet may be provided within the air inlet passage over at least a part of its length. The air inlet passage and exhaust gas outlet may be provided concentrically with one another. The air inlet passage may be in thermal contact with the water of the hot water storage tank by providing a part of the air inlet passage in contact with the hot water storage tank or water thereof. The air inlet passage may be provided within the hot water storage tank over at least a part of its length. The air inlet passage may be provided by one or more passages. The passage(s) may be linear or helical and/or convoluted.

Another heat exchanger may be provided within the space heating system and/or water heating system. The another heat exchanger may be in thermal contact with the cold water feed to the burner unit. The another heat exchanger may be provided between the hot heating outlet from the burner unit and the cooler heating inlet return to the burner unit. The another heat exchanger may be connected to the hot heating outlet and cooler heating inlet. The another heat exchanger may be connected to the cold water feed and/or to the hot water outlet of the water heating system. Heat may be passed from the space heating system to the water heating system through the another heat exchanger. The another heat exchanger may be provided in thermal contact with the hot water storage tank. A pump may be provided to circulate water from the hot water storage tank to the another heat exchanger.

According to a fourth aspect there is provided a method of heating water, the method comprising providing a burner unit, the burner unit being connected to a fuel source, burning that fuel, the exhaust gases from the burning of the fuel passing to an exhaust gas outlet, the exhaust gases passing through a heat exchanger, heat being transferred from the exhaust gases to the hot water storage tank.

The fourth aspect of the invention may include any of the options, features or possibilities set out elsewhere within this document, including those of the other aspects of the invention and the options, features and possibilities provided therefor.

The method may provide for water being passed from a hot water storage tank along a water outlet passage to a heat transfer passage in the heat exchanger, the heat transfer passage being in contact with the exhaust gases, the exhaust gases conveying heat to the water in the heat transfer passage, water in the heat transfer passage passing along a water inlet into the hot water storage tank

The method may provide for the exhaust gases passing through a heat exchanger, with the heat exchanger being at least partially within the hot water storage tank.

According to a fifth aspect there is provided a method of heating water, the method comprising providing a burner unit, the burner unit being connected to a fuel source and burning that fuel, the exhaust gases from the burning of the fuel passing to an exhaust gas outlet, the exhaust gases passing through a heat exchanger, water being passed from a hot water storage tank along a water outlet passage to a heat transfer passage in the heat exchanger, the heat transfer passage being in contact with the exhaust gases, the exhaust gases conveying heat to the water in the heat transfer passage, water in the heat transfer passage passing along a water inlet into the hot water storage tank.

The fifth aspect of the invention may include any of the options, features or possibilities set out elsewhere within this document, including those of the other aspects of the invention and the options, features and possibilities provided therefor.

The method may provide hot water to one or more outlets. The method may provide hot water to one or more sinks, baths or showers.

The method may include passing water along a cold water inlet from the hot water storage tank to the burner unit. The water may be pumped to the burner unit. The method may include passing water from the burner unit along a hot water outlet to the hot water storage tank and/or to one or more outlets, for instance one or more sinks, baths or showers.

The method may include taking water from the hot water storage tank through the cold water inlet to the burner unit at a level which is below the level at which water is passed to the hot water storage tank along the hot water outlet from the burner unit. The method may include monitoring the temperature of the water in the hot water storage tank. The method may measure the temperature at a level above the level at which water is taken into the cold water inlet leading to the burner unit. The method may measure the temperature at a level below the level at which water is returned to the hot water storage tank through the hot water outlet from the burner unit.

The method may provide that when the temperature monitored by the temperature monitor is below a threshold value, water flows from the hot water storage tank to the burner unit. The method may then provide that the water is heated by the burner unit. The method may provided that when the temperature monitored by the temperature monitor is below a threshold value, water flows from the burner unit to the hot water storage tank.

The method may provide that when water flows from one or more of the outlets from the water heating system, water flows from the hot water storage tank to the burner unit.

The method may circulate water within a water heating circuit including the water outlet from the hot water storage tank, heat transfer passage in the heat exchanger and water inlet to the hot water storage tank. The method may provide that the water inlet to the hot water storage tank and water outlet from the hot water storage tank are connected to one another by a water tank heat transfer passage provided within the hot water storage tank. The method may provide that the water in the water heating circuit is physically isolated from the water in the hot water storage tank.

The method may provide that the water heating circuit is a secondary water heating circuit, preferably with the method passing water through a primary water heating circuit provided by the cold water inlet which leads from the hot water storage tank to the burner unit and the hot water outlet which leads from the burner unit to the hot water storage tank and/or one or more outlets.

The method may include pumping the water within the water heating circuit and/or between the hot water storage tank and the heat transfer passage in the heat exchanger and/or in the water outlet passage leading to the heat transfer passage.

The method may provide that water is passed through the outlet leading to the heat exchanger from the hot water storage tank from a level in the hot water storage tank which is below the level at which water is returned through the water inlet leading from the heat exchanger to the hot water storage tank. The method may provide that water passes from the hot water storage tank to the water outlet leading to the heat exchanger at a level which is below the level of the cold water inlet leading to the burner unit and/or below the hot water outlet leading from the burner unit to the hot water storage tank. The method may provide that water passes to the hot water storage tank from the water outlet leading from the heat exchanger at a level which is below the level at which the cold water inlet takes water to the burner unit and/or below level at which the hot water outlet leads water from the burner unit to the hot water storage tank.

The method may provide for cold water being fed to the hot water storage tank, preferably through a cold water feed inlet. The method may provide cold water from the mains water supply. The method may provide the cold water from a header tank. The method may provide that cold water is introduced to the hot water storage tank through the cold water feed inlet at a level which is below level at which water passes through the cold water inlet to the burner unit and/or below level at which water passes through the hot water outlet to the hot water storage tank and/or below the level at which water passes to the water outlet leading to the heat exchanger and/or below the level at which water returns from the water inlet leading from the heat exchanger. The method may provide that cold water flows into the hot water storage tank through the cold water feed inlet when water is removed from the water heating system via one or more of the outlets, for instance at one or more sinks, baths or showers.

The method may provide the heat exchanger above the burner unit. The method may include leading exhaust gases from the burner unit, through the heat exchanger and out to the atmosphere external to a building in which the system is used.

The method may provide that the exhaust gases pass through a first part of the heat exchanger in a first direction and pass through a second part of the heat exchanger in a different direction. Preferably the different direction is the opposite direction to the first direction. The method may use a baffle plate to divide the passage through the heat exchanger

The method may provide a heat exchanger comprising a passage through which water passes and around which the exhaust gases pass. One or more such passages may be provided within the heat exchanger. One or more passages having a convoluted passage may be provided. One or more helical or coiled passageways may be provided.

The method may provide the passage of heat from the hot exhaust gases to the cooler water through the heat transfer passage.

The method may also be a space heating method. The space heating method may be used to heat air within a building. The method may include circulating water within a space heating system, preferably one which is separate to the water circuit for the water heating system. The method may use a space heating system which includes a burner unit provided with a space heating system cold water inlet. The method may use a space heating system which includes a burner unit provided with a space heating system hot water outlet.

The method may use a space heating system which includes a burner unit connected to a space heating system cold water inlet passage, particularly via a space heating system cold water inlet. The method may use a space heating system in which the cold water inlet passage is connected to one or more radiators. The method may use a space heating system which includes a burner unit connected to a space heating system hot water outlet passage, particularly via a space heating system hot water outlet. The method may use a space heating system in which the hot water outlet passage is connected to one or more radiators. The method may use a space heating system in which the cold water inlet passage, space heating system hot water outlet passage and one or more radiators provide a space heating circuit.

The heat transfer passage in the heat exchanger may be kept full of water. However, a pump may be provided, together with a controller, the pump being activated to provide water to the heat transfer passage and/or remove water from the heat transfer passage. The pump may be deactivated to allow water to drain under gravity from the heat transfer passage. The pump may be activated to provide water when exhaust gases are passing through the heat exchanger and/or when the exhaust gases passing through the heat exchanger are above a temperature level.

The hot water storage tank and burner unit may be provided within a single casing. The hot water storage tank may store water only generated by the heat exchanger. The hot water storage tank may store water generated by the heat exchanger and/or the burner unit.

The method may provide a system including a further water heating circuit. The further water heating circuit may pass water through a water outlet from the hot water storage tank to one or more solar panels. The method may pass water through a water inlet leading from the one or more solar panels to the hot water storage tank.

The method may pump water around the further water heating circuit.

The method may take water to the one or more solar panels from the hot water storage tank from a level below the level of the water inlet leading from the one or more solar panels to the hot water storage tank. The method may take water to the one or more solar panels from a level provided below the cold water inlet leading to the burner unit and/or below the hot water outlet leading from the burner unit to the hot water storage tank. Preferably the method passes water through the water outlet leading from the one or more solar panels to the hot water storage tank at a level below the cold water inlet leading to the burner unit and/or below the hot water outlet leading from the burner unit to the hot water storage tank.

The method may provide that where the hot water storage tank is provided with a cold water feed inlet, the cold water feed inlet to the hot water storage tank is preferably provided below the water outlet leading to the one or more solar panels and/or below the water inlet leading from the one or more solar panels.

When hot water is removed from the hot water storage tank, cold water may be fed to the hot water storage tank through the heat exchanger. The cold water is preferably introduced to the hot water storage tank at the bottom of the hot water storage tank. The cold water is preferably directed to the hot water storage tank through the heat exchanger by a valve. The valve may be provided according to the ninth aspect of the invention. The valve may inhibit and/or prevent the flow of water from the cold water feed to the hot water storage tank without passing through the heat exchanger. The valve may inhibit and/or prevent the flow of water from the cold water feed to the hot water storage tank without passing through the heat exchanger, due to the cold water pressure closing the valve.

The valve may move to a first state which allows the connection of the cold water feed to the hot water storage tank through the heat exchanger when pressure is applied the system by the cold water.

Cooler water is preferably conveyed along the water outlet leading from the hot water storage tank to the heat exchanger from the bottom of the hot water storage tank. Warmed water is preferably conveyed from along the water inlet leading from the heat exchanger to the hot water storage tank above the water outlet and/or at the top of the hot water storage tank. Preferably the valve is provided between the heat exchanger and the water inlet.

Preferably the cold water feed is introduced to the water inlet leading from the heat exchanger to the hot water storage tank between the heat exchanger and the valve.

The valve may move to a second state when pressure is removed and/or reduced in the system, for instance through the prevention of cold water introduction.

The method may include transferring heat from water in at least a part of the hot water storage tank to the contents, preferably water, of a second tank. The method may include, at a different time, transferring heat from the contents of the second tank to at least a part of the water in the hot water storage tank. The second tank is preferably provided entirely within the hot water storage tank. The second tank is preferably in contact with water contained within the hot water storage tank and more preferably is surrounded thereby.

The contents of the second tank may expand into and/or contract from the space heating system by means of a pipe.

The second tank may be heat or receive heat from the lower part of the hot water storage tank, for instance in the bottom half by height or volume, or for instance, the lower third by height or volume.

The second tank may heat or receive heat from the hot water storage tank along at least 50% of the length and/or width of the hot water storage tank's extent at the same height, preferably at least 70%, more preferably at least 80%, of the length and/or width.

The method may include feeding hot water from the boiler to the hot water storage tank. The method may include feeding warmed water from the heat exchanger to the hot water storage tank.

The method may include introducing cold water to the bottom of the hot water storage tank. The method may include removing hot water from the top of the hot water storage tank. The method may include providing heated water from the heat exchanger to the upper part and/or top of the hot water storage tank. The method may include providing cooler water for feeding to the heat exchanger from the lower part and/or bottom of the hot water storage tank.

According to a sixth aspect there is provided a method of heating water, the method comprising providing a burner unit, the burner unit being connected to a fuel source and burning that fuel, the exhaust gases from the burning of the fuel passing to an exhaust gas outlet, the exhaust gases passing through a heat exchanger, the heat exchanger being at least partially within the hot water storage tank.

The sixth aspect of the invention may include any of the options, features or possibilities set out elsewhere within this document, including those of the other aspects of the invention and the options, features and possibilities provided therefor.

The method may provided that the burner unit is provided within a boiler.

The method may include providing cold water to the burner unit through a cold water inlet. The method may include taking hot water from the burner unit through a hot water outlet. The method may provide hot water to the hot water storage tank and/or to one or more outlets, for instance one or more sinks, baths or showers.

The method may provide that when water flows from one or more of the outlets from the water heating system, water flows through the burner unit.

The method may use a hot water storage tank and burner unit provided within a single casing. The method may provide for the hot water storage tank storing water only generated by the heat exchanger. The method may provide that the hot water storage tank stores water generated by the heat exchanger and/or the burner unit.

The method may use a heat exchanger provided within the hot water storage tank. The water of the hot water storage tank may be provided in contact with the bottom of the heat exchanger. The water of the hot water storage tank may be provided in contact with one or more or all of the sides of the heat exchanger. The water of the hot water storage tank may be provided in contact with the top of the heat exchanger. The hot water storage tank, and preferably the water there of, may be provided around the entire heat exchanger.

The method may pass exhaust gases from the boiler through a wall of the hot water storage tank to the heat exchanger. The method may pass exhaust gases from the heat exchanger through a wall of the hot water tank. The method may include the exhaust gases being in contact with or be surrounded by the water of the hot water storage tank for part of its path.

The method may include supplying water from the hot water storage tank via a hot water outlet. The method may supply water to one or more outlets, such as sinks, baths or showers. The method may take water from the upper half of the hot water storage tank, and more preferably in the top 15% thereof. The method may include supplying the hot water storage tank with a cold water feed inlet. The cold water feed inlet may be directly or indirectly connected to the mains water supply. The method may receive the cold water feed in the lower half of the hot water storage tank, and more preferably in the bottom 15% thereof.

The water of the hot water storage tank is preferably heated during water heating mode for the burner unit and during space heating mode for the burner unit.

Preferably hot water rises through the chambers extending through the heat exchanger. Preferably cold water sinks around the periphery of the hot water storage tank and/or heat exchanger.

The heat exchanger may be provided above the burner unit. The heat exchanger may be provided below the burner unit. The heat exchanger may be provided alongside the burner unit. The exhaust gas outlet may lead from the burner unit, through the heat exchanger and out to the atmosphere external to a building in which the system is used.

The method may provide that the exhaust gases pass through a first part of the heat exchanger in a first direction and pass through a second part of the heat exchanger in a different direction. Preferably the different direction is the opposite direction to the first direction. The method may use a baffle plate to divide the passage through the heat exchanger

The method may provide a heat exchanger comprising a passage through which water passes and around which the exhaust gases pass. One or more such passages may be provided within the heat exchanger. One or more passages having a convoluted passage may be provided. One or more helical or coiled passageways may be provided. The method may provide the passage of heat from the hot exhaust gases to the cooler water through the heat exchanger.

The method may use an expansion vessel provided as a part of the water heating circuit and/or between the heat exchanger and the space heating system and/or between the hot water storage tank and the space heating system. The method may use the same expansion vessel to accommodate expansion within the heat exchanger and the hot water storage tank, as accommodates expansion within the space heating system.

The method may also be a space heating method. The space heating method may be used to heat air within a building. The method may include circulating water within a space heating system, preferably one which is separate to the water circuit for the water heating system. The method may use a space heating system which includes a burner unit provided with a space heating system cold water inlet. The method may use a space heating system which includes a burner unit provided with a space heating system hot water outlet.

The method may use a space heating system which includes a burner unit connected to a space heating system cold water inlet passage, particularly via a space heating system cold water inlet. The method may use a space heating system in which the cold water inlet passage is connected to one or more radiators. The method may use a space heating system which includes a burner unit connected to a space heating system hot water outlet passage, particularly via a space heating system hot water outlet. The method may use a space heating system in which the hot water outlet passage is connected to one or more radiators. The method may use a space heating system in which the cold water inlet passage, space heating system hot water outlet passage and one or more radiators provide a space heating circuit.

The hot water storage tank and burner unit may be provided within a single casing. The hot water storage tank may store water only generated by the heat exchanger. The hot water storage tank may store water generated by the heat exchanger and/or the burner unit.

The method may provide a system including a further water heating circuit. The further water heating circuit may pass water through a water outlet from the hot water storage tank to one or more solar panels. The method may pass water through a water inlet leading from the one or more solar panels to the hot water storage tank.

The method may pump water around the further water heating circuit.

The method may take water to the one or more solar panels from the hot water storage tank from a level below the level of the water inlet leading from the one or more solar panels to the hot water storage tank. The method may take water to the one or more solar panels from a level provided below the cold water inlet leading to the burner unit and/or below the hot water outlet leading from the burner unit to the hot water storage tank. Preferably the method passes water through the water outlet leading from the one or more solar panels to the hot water storage tank at a level below the cold water inlet leading to the burner unit and/or below the hot water outlet leading from the burner unit to the hot water storage tank.

The method may use a cold water feed pre-heating circuit may be provided. This may take the whole or part of the cold water form the mains supply to the system and pre-heat it before it is passed to the burner unit. The cold water feed pre-heating circuit may include a further heat exchanger. The further heat exchanger may be provided with a cold water feed inlet and a pre-heated cold water outlet. The pre-heated cold water outlet may be connected to the cold water feed to the burner unit. The further heat exchanger may be provided within the hot water storage tank. The further heat exchanger is preferably provided in the upper part, for instance upper third of the hot water tank. The further heat exchanger may be provided above the heat exchanger. The further heat exchanger may be in the form of a coil or helix. The further heat exchanger may be a plate type heat exchanger. The further heat exchanger may promote water circulation in the hot water storage tank and/or through the heat exchanger, for instance by cooling the upper part of the hot water storage tank.

The water heating system may provide water to the space heating system from the hot water storage tank. The water heating system may only provide water to the space heating system from the hot water storage tank when the temperature of the water within the hot water storage tank, and/or at a location therein, is above a threshold value. The water may be supplied to the space heating system through a heating system hot water outlet. The space heating system hot water outlet may be provided in the upper half of the hot water storage tank, and more preferably in the top 15% thereof. The water may be returned from the space heating systems to the hot water storage tank through a heating system hot water inlet. The heating system hot water inlet may be provided in the lower half of the hot water storage tank, and more preferably in the bottom 15% thereof.

The exhaust gas outlet from the boiler may pass through a wall of the hot water storage tank to the heat exchanger. The exhaust gas outlet from the heat exchanger may pass through a wall of the hot water tank. The exhaust gas outlet may be in contact with or be surrounded by the water of the hot water storage tank for part of its path.

The combustion air for the burner unit may reach the burner unit by an air inlet passage. The air inlet passage may be in thermal contact with the exhaust gases and/or with the water of the hot water storage tank. The air inlet passage may be in thermal contact with the exhaust gases by providing part of the exhaust gas outlet in contact with the air inlet passage. The air inlet passage may be provided within the exhaust gas outlet over at least a part of its length, or more preferably the exhaust gas outlet may be provided within the air inlet passage over at least a part of its length. The air inlet passage and exhaust gas outlet may be provided concentrically with one another. The air inlet passage may be in thermal contact with the water of the hot water storage tank by providing a part of the air inlet passage in contact with the hot water storage tank or water thereof. The air inlet passage may be provided within the hot water storage tank over at least a part of its length. The air inlet passage may be provided by one or more passages. The passage(s) may be linear or helical and/or convoluted.

Another heat exchanger may be provided within the space heating system and/or water heating system. The another heat exchanger may be in thermal contact with the cold water feed to the burner unit. The another heat exchanger may be provided between the hot heating outlet from the burner unit and the cooler heating inlet return to the burner unit. The another heat exchanger may be connected to the hot heating outlet and cooler heating inlet. The another heat exchanger may be connected to the cold water feed and/or to the hot water outlet of the water heating system. Heat may be passed from the space heating system to the water heating system through the another heat exchanger. The another heat exchanger may be provided in thermal contact with the hot water storage tank. A pump may be provided to circulate water from the hot water storage tank to the another heat exchanger.

According to a seventh aspect there is provided a kit for use in heating water, the kit including a heat exchanger, a connector for attaching the heat exchanger to the exhaust gas outlet from a burner unit, a connector for attaching the heat exchanger to the exhaust gas outlet leading to atmosphere, a connection for attaching the heat exchanger to a water supply leading from a hot water storage tank, a connection for attaching the heat exchanger to a water outlet leading from the heat exchanger to a hot water storage tank.

The seventh aspect of the invention may include any of the options, features or possibilities set out elsewhere within this document, including those of the other aspects of the invention and the options, features and possibilities provided therefor.

Preferably the kit includes instructions and/or drawings describing the connection of the heat exchanger to the exhaust gas outlet from a burner unit, a connection of the heat exchanger to the exhaust gas outlet leading to atmosphere, the connection of the heat exchanger to a water supply leading from a hot water storage tank, the connection of the heat exchanger to a water outlet leading from the heat exchanger to a hot water storage tank.

The kit may further include pipe work for connecting the heat exchanger unit to the exhaust gas outlet from a burner unit and/or to the exhaust gas outlet leading to atmosphere and/or to the water supply leading from a hot water storage tank and/or to a water outlet leading from the heat exchanger to a hot water storage tank.

The kit may include a water pump and/or expansion vessel and/or safety valve and/or filling point or filling valve.

The kit may include a hot water storage tank. The hot water storage tank may be provided with a water outlet passage for connection to a heat transfer passage in the heat exchanger. The hot water storage tank may be provided with a water inlet to the hot water storage tank for connection to a heat transfer passage in the heat exchanger. The kit may include a heat transfer passage within the hot water storage tank.

The kit may include a heat transfer passage for insertion into a hot water storage tank.

The kit may further include a burner unit. The kit may pipework for connecting the burner unit to a hot water storage. The kit may include a water pump for circulating water between the burner unit and the hot water storage tank.

The kit may include one or more radiators. The kit may include pipework for connecting the one or more radiators to the burner unit.

According to an eighth aspect there is provided a kit for use in heating water, the kit including a heat exchanger, a connector for attaching the heat exchanger to the exhaust gas outlet from a burner unit, a connector for attaching the heat exchanger to the exhaust gas outlet leading to atmosphere.

The eighth aspect of the invention may include any of the options, features or possibilities set out elsewhere within this document, including those of the other aspects of the invention and the options, features and possibilities provided therefor.

Preferably the kit includes instructions and/or drawings describing the connection of the heat exchanger to the exhaust gas outlet from a burner unit, a connection of the heat exchanger to the exhaust gas outlet leading to atmosphere.

The kit may include a connection for attaching the hot water storage tank to the hot water system and/or space heating system and/or for attaching the hot water storage tank to a cold water pre-heating circuit, and particularly a further heat exchanger provided therein.

The kit may further include pipe work for connecting the heat exchanger unit to the exhaust gas outlet from a burner unit and/or to the exhaust gas outlet leading to atmosphere.

The kit may include a water pump and/or expansion vessel and/or safety valve and/or filling point or filling valve.

The kit may include a hot water storage tank. The hot water storage tank may be provided with an outlet passage to the water heating system and/or an inlet passage from the water heating system and/or an outlet to the space heating system and/or an inlet from the space heating system.

The kit may further include a burner unit. The kit may pipework for connecting the burner unit to a hot water storage. The kit may include a water pump for circulating water between the burner unit and the hot water storage tank.

The kit may include one or more radiators. The kit may include pipework for connecting the one or more radiators to the burner unit.

The kit may include a connection and/or pipework for passing the air feed to the burner unit through the hot water storage tank.

According to a ninth aspect of the invention we provide a valve, the valve comprising a body enclosing a chamber, the chamber having an inlet and an outlet, a closure element being provided within the chamber, the closure element having a second state in which fluid flow between inlet and outlet is possible and a first state in which fluid flow between inlet and outlet is at least reduced, the closure element moving from the first state to the second state when the flow of fluid through the valve is at or exceeds a threshold.

The body may be cylindrical. The inlet may be circular in cross-section. The inlet may be provided at one end of the chamber. The inlet may be axially aligned with the chamber. The outlet may be circular in cross-section. The outlet may be provided at the other end of the chamber. The outlet may be axially aligned with the chamber and/or the inlet.

The closure element may be a sphere. Preferably the density of the sphere is used to define the threshold, particularly with water as the fluid. The closure element may be of metal, for instance brass.

In the second state, the closure element may be spaced from the outlet. The closure element may rest on a spacer provided within the chamber. The spacer may be formed by one or more elements extending across the chamber, particularly the width thereof. The spacer may keep the closure element away from the inlet. Through apertures may be provided whatever position the closure element occupies resting on the spacer.

In the first state, the closure element may abut the outlet. The closure element may self-locate in the outlet, for instance due to the closure element being a sphere and the outlet having a circular cross-section. The closure element may totally or partially prevent flow through the outlet in the first state.

The closure element may move from the second state to the first state when fluid flow through the chamber exerts a force on the closure element greater than the opposing force due to gravity.

The first state may provide the closure element in a position above the position in the second state.

Once in the second state, the pressure applied to the closure element may maintain it in the second state.

The return from first to second state may be due to gravity.

Various embodiments of the invention will now be described, by way of example only, and with reference to the accompanying figures, in which:
Figure 1 illustrates a first embodiment of the invention in which a heat exchanger is used to heat water in a storage tank from the exhaust fumes of a boiler;
Figure 2 illustrates a second embodiment of the invention which employs a header tank and a solar power system;
Figure 3 illustrates a third embodiment of the invention which employs a solar power system;
Figure 4 illustrates an integrated boiler and water storage unit;
Figure 5 illustrates a variation of the Figure 4 embodiment where the hot water from the heat exchanger passes through the boiler;
Figure 6 illustrates a further embodiment with the side mounted heat exchanger unit;
Figure 7 illustrates the still further embodiment with the heat exchanger integrated into the heating system;
Figure 8 illustrates the yet further embodiment which provides for combustion air pre-heating;
Figure 9a illustrates a further embodiment of the invention during heating mode;
Figure 9b illustrates the further embodiment of the invention of Figure 9a in hot water mode;
Figure 10a illustrates a further embodiment of the invention during heating mode;
Figure 10b illustrates the further embodiment of the invention of Figure 10a in hot water mode;
Figure 11 a illustrates a variation of the embodiment of Figure 9a, where the storage tank is provided above the boiler, the embodiment being in heating mode;
Figure 11b illustrates a variation of the embodiment of Figure 9b, where the storage tank is provided above the boiler, the embodiment being in hot water mode;
Figure 12a is a cross-sectional side view of a value for use in the present invention, shown in the open position;
Figure 12b is a cross-sectional plan view of the valve of Figure 12a;
Figure 12c is a cross-sectional side view of the valve of Figures 12a and 12b, in the closed position;
Figure 13a illustrates a further embodiment of the invention during heating mode;
Figure 13b illustrates the further embodiment of the invention of Figure 13a in hot water mode;
Figure 14 illustrates a further embodiment of the invention employing a water tank within another water tank, the inner tank being connected to the heating system;
Figure 15a illustrates a further embodiment of the invention during heating mode; and
Figure 15b illustrates the further embodiment of the invention of Figure 15 in hot water mode.

Most modem houses are provided with a boiler which bums fuel to heat water. The heated water is used in two ways: to circulate through a heating system and so heat the house; and to provide the hot water for a domestic hot water system, with that hot water being used for washing, bathing and the like.

There is an increasing need to make such boilers as efficient as possible, so as to reduce running costs, fuel consumption and emissions.

In a so called "combi" boiler, the heat level in the heating system is topped up by the boiler as needed. A low level flame is used for this. However, the domestic hot water system is only provided with hot water as it is demanded, for instance when a tap is turned. During the hot water generating mode a higher level flame is provided as the water needs to be quickly heated from cold to hot. The domestic hot water travels directly from the "combi" boiler to the point where it is to be used. There is no storage capacity.

There are examples of the cold water feed for a domestic hot water system in a "combi" boiler being contacted with the hot exhaust fumes from a boiler prior to passing to the heating location within the boiler and then on to the point of use. GB2420174 is such an example, however, the heating of the cold water by the exhaust fumes only occurs in such a system when the boiler is in domestic hot water generating mode. Only then is there water flow through the piping which passes through the hot exhaust fumes. A small amount of the heat in the exhaust fumes is thus extracted, with a small reduction in the amount that the domestic hot water has to be heated by to reach the desired temperature. Heating of the water using the conventional contact with the flame of the boiler is still essential to gain warm or hot water. The contact with the exhaust fumes is short and one off so no useful warm or hot water is derived from that contact alone.

The present invention is applicable to the recovery of heat from the exhaust gases of combi boilers, but is equally applicable to the recovery of heat from the exhaust gases of other boiler types, including boilers which are intended for space heating only.

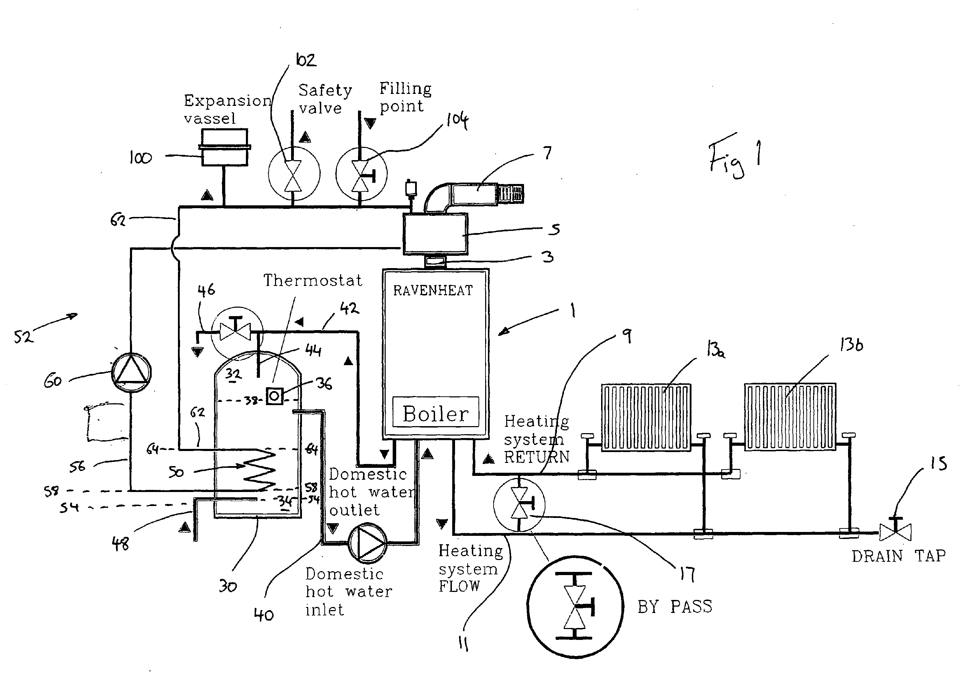

In the embodiment of the invention shown in Figure 1, a boiler 1 is provided. Fuel is fed to the boiler 1 on demand and is burnt to generate heat. The fuel supply lines are not shown, but the hot gases generated in the combustion process leave the top of the boiler 1 through exhaust 3, before passing through heat exchanger 5 and then on to the further exhaust 7 which convey the exhaust fumes out of the building.

To the right hand side of Figure 1, a schematic illustration of the heating system is provided. This includes a heating system return pipe 9 which brings the cooler water back to the boiler 1. Within the boiler 1, this water is then heated and passes to heating system out pipe 11. The heating system out pipe 11 supplies hot water to a series of radiators 13a, 13b which are connected in parallel. A drain tap 15 is provided to allow the water to be removed from the circuit should this be necessary for maintenance purposes. A by-pass value 17 is also provided.

The domestic hot water system is schematically shown in the left-hand side of Figure 1. The approach uses a hot water storage tank 30. Flow conditions within the tank 30 are preferably non-turbulent throughout its operation so as to keep water of different densities, due to their different temperatures, in position according to its density. The hotter the water, the lower its density, and so the greater its tendency to accumulate towards the top 32 of the tank 30. The cooler the water, the greater its density, and so the greater its tendency to accumulate towards the bottom 34 of the tank 30.

A thermostat 36 is provided at a location 38 on the tank 30. Below the level of the thermostat 36, a boiler feed pipe 40 is provided so that water can be drawn from the tank and fed to the boiler 1. When the temperature of the water in the tank 30 at the level of the thermostat 36 falls below a trigger temperature, water is allowed to pass to the boiler feed pipe 40. The temperature at the level of the thermostat may be changed due to cooling of the water in the tank or due to hot water being drawn off for use. The water passes along the boiler feed pipe 40, into the boiler 1, contacts the combustion flame and is heated to a higher temperature. The water leaves the boiler 1 by way of boiler outlet pipe 42. If hot water is not being used at that time, the hot water is fed to the tank 30 through tank hot water inlet 44. This hot water is less dense than the cooler water of the tank 30 and so will tend to "sit" on top of the cooler water in the tank 30. As more hot water is returned to the tank 30, the level at which hot water is present in the tank will move down, until it reaches the thermostat 36 and causes it to turn off the passage of water to the boiler feed pipe 40.

In this way, a significant volume of hot water is provided in the upper part of the tank 30.

When the hot water is needed, it is drawn off through hot water supply pipe 46.

The present invention also provides for the capture and retention of further heat within the system.

At the bottom of the tank 30 is a cold water feed pipe 48 which is used to replace water in the domestic hot water system when it is removed by use. This tends to be the coldest water in the system and so naturally settles towards the bottom of the tank 30.

Within the tank 30, a heat transfer passage 50 is provided. This passage is part of a closed loop 52, the heat transfer passage 50 of which passes through the tank 30. As show, the heat transfer passage 50 is helical, but other configurations can be used. Above the level 54 of the cold water feed pipe 48, cool water is drawn out through the side wall of the tank 30 and along a heat exchanger feed pipe 56. This is at a level 58. The water in the heat exchanger feed pipe 56 passes to a pump 60 and then on to the heat exchanger 5 provided above the boiler.

Within the heat exchanger 5, the water contacts the hot fumes from the combustion within the boiler 1 and so is heated by these fumes. In heating mode, these fumes are around 50°C, whilst in hot water mode, the fumes are of higher temperature due to the greater fuel input in that mode. The water is conveyed from the heat exchanger 5 by heat exchanger outlet pipe 62 and back to the heat transfer passage 50 within the tank 30. The heat exchanger outlet pipe 62 enters the tank 30 at a higher level 64 than the heat exchanger feed pipe 56. The hotter water contained in the heat transfer passage 50 conveys heat to the water around it in the tank 30. The water in the loop 52 is recirculated repeatedly. Hence, heat is recovered from the exhaust fumes, where it would otherwise be wasted by release to the atmosphere, and is retained within the tank 30. Furthermore, the heat retained in this way builds up and generates a significant volume of warm water in its own right which can be used for showering and the like, even if there is no heating of this part of the water by passing it through the flame in the boiler 1. This middle volume of warm water also serves to warm the cold replacement water entering the very bottom of the tank 30 before it moves up to the level where it is fed to the boiler 1 for direct heating.

Because the heat is extracted from the exhaust fumes using a dedicated loop 52, that loop operates during both heating only mode and during hot water mode. This means that efficiency is increased in both modes and greater heat is recovered. This compares with prior art systems in which the cold water on its way to the boiler to form directly the hot water demanded, is heated within the heat exchanger. By definition this can only occur in the hot water mode as only then is there water going through the heat exchanger. Furthermore, because the water passes through the heat exchanger over and over, it increases the heat in the relevant part of the tank 30 to a considerable degree and is of a useful temperature in its own right. This contrast with the single short pass of the prior art which may warm the cold feed by a few degrees, but doe not achieve useable warm water in its own right.

The system works particularly well with a pressurised exhaust stream, but heat exchanger designs with such a low resistance that they work on non-pressurised exhausts are available, including the design of EP0945688. A fan can be provided in the exhaust stream to assist flow, if necessary.

Because the approach of the present invention removes a significant amount of the heat in the exhaust fumes, it has the beneficial effect of reducing or even eliminating "fuming" at the exhaust outlet from the building. "Fuming" is observed where the hot exhaust gases mix with the cold ambient air. This can give the mistaken appearance of a fault with the boiler.

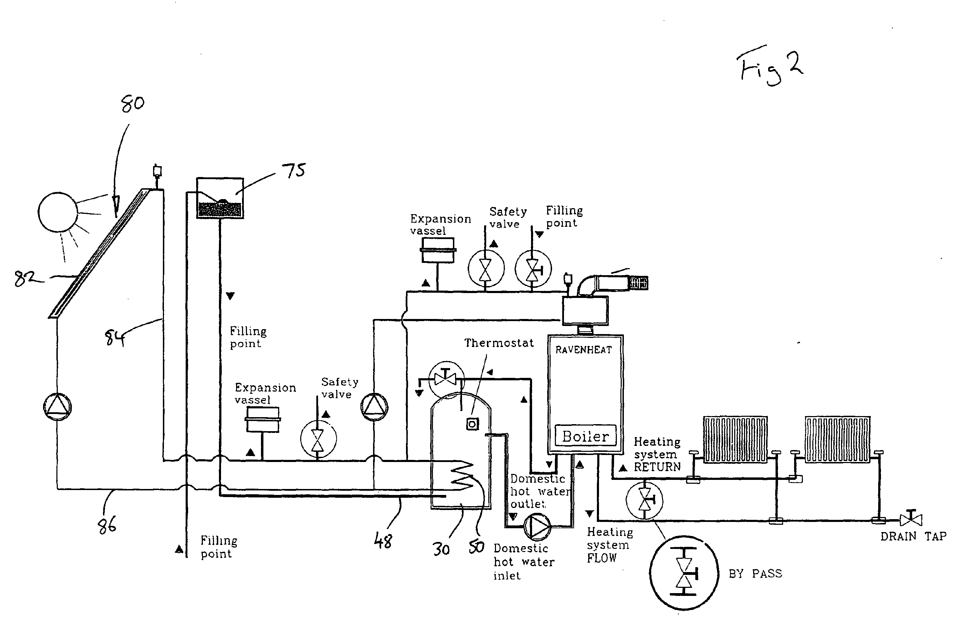

As described above, the cold water feed pipe 48 comes direct from the pressurised mains water supply to the building. This pressure moves the water into the tank 30 as needed. In an alternative embodiment, the replacement cold water can be introduced from a header tank 75 as shown in Figure 2. This has the advantage of enabling a constant pressure of water to be introduced to the cold water feed pipe 48 entering the tank 30, even in situations where the local mains water pressure is insufficient or is insufficiently constant to be useful.

As described above, the loop 52 is a closed system which removes heat from the exhaust fumes by contact there with, through the wall of a passageway, and introduces heat to the water of the tank 30 by contact there with, through the wall of the heat transfer passage 50. An expansion vessel 100 is provided to accommodate changes in the volume of the water present due to temperature variations overtime. A separate safety value 102 is provided to protect against undesirable pressure build up within the closed loop 52. A separate filling point 104 is provided so that water can be introduced into the closed loop 52 if necessary.

In a further embodiment of the invention, the system is simplified by making the loop 52 an open vented loop. This enables the system to do away with the separate expansion vessel 10, safety valve 102 and filling point 104, so reducing cost and complexity. Instead, any expansion is accommodated within a header tank 75. The header tank 75 also maintains the water within the heat exchanger 5.

Because the extraction of heat from the exhaust fumes of the heat exchanger 5 is beneficial, rather than essential, to the operation of the system, it is not a problem if the water runs dry in the heat exchanger 5. In such a situation, the heat is not extracted and retained, but no problems arise.

As a result of the exhaust fumes being cooled within the heat exchanger 5, moisture within the exhaust fumes will condense to an increased extent. It is possible to collect this water within the heat exchanger 5. The collected water can be fed to a waste outlet. However, as this water will be hot, further heat is retained from the system if that water is introduced to the hot water system.

Because the condensate may be acidic, there may be a need for it to be neutralised before it is placed in the hot water tank 30, particularly if that is a copper tank.

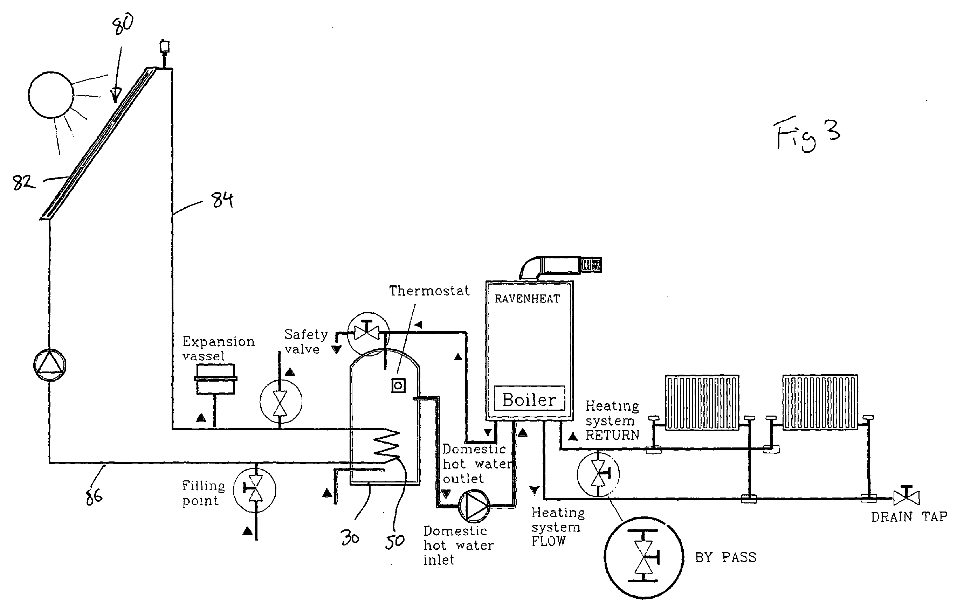

Figure 2 was mentioned above in the context of showing a header tank 75 for use in providing the cold water for the cold water feed pipe 48 at the bottom of the tank 30. Figure 2 also shows a solar panel system 80 which can be used with the header tank 75 and circuit from the heat exchanger 5 or without them, as shown in Figure 3.

The solar panel system 80 provides a solar panel 82 mounted at a suitable location so as to heat water within it. This water is conveyed by a solar panel outlet pipe 84 into the heat transfer passage 50 within the tank 30. Here the hot water is used to heat water in the middle part of the tank 30 in a similar way to the hot water obtained from the heat exchanger 5.

The cooled water leaving the heat transfer passage 50 is returned back to the solar panel 82 for reheating using a solar panel feed pipe 86.

Such a system allows for solar power also to supplement the heating of the water within the tank 30, to provide a body of useful warm water in its own right and to assist with the warming of the cold water newly introduced to the tank 30 from the mains or header tank 75.

The embodiments of the invention provided above have been described in the context of water always being present within the heat exchanger 5. It is possible, however, to provide for the pumping of water into the heat exchanger 5 when there are exhaust fumes to draw heat from, but with the pump 60 being turned off when the hot fumes are not present. When the pump 60 is turned off, the water may be allowed to drain out of the heat exchanger 5 under the influence of gravity.

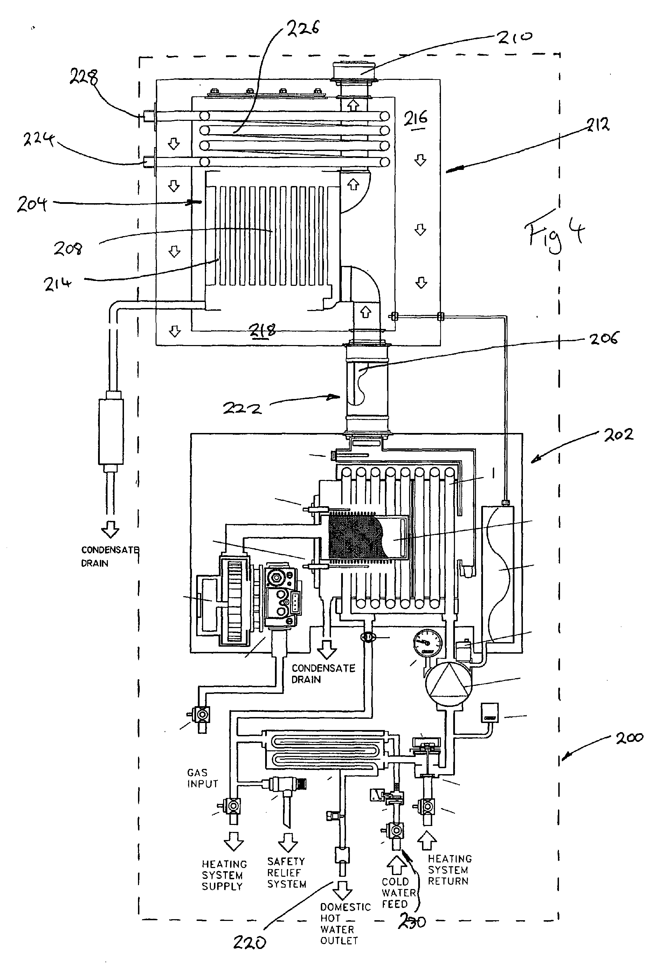

As described above, the tank 30 is a large tank provided separate from the boiler and potentially at quite a distance therefrom. It is possible, as shown in Figure 4, to provide a common unit 200 which provides both a boiler 202 and a storage tank 204 within it. The storage tank may be used to store water heated by the boiler 202 directly and via the heat exchanger 206 or, as shown, may be used just to store warm water generated by the heat exchanger 206. The boiler 202 may provide direct heating of the water on demand, in the later case and this is the form shown in Figure 4.

In more detail, the exhaust gases from the boiler 202 exit the boiler via an exhaust 206 which leads up into the heat exchanger 204. Here the exhaust gases make a right-angled turn and then are circulated through the plates 208 of the heat exchanger 204 before exiting via exhaust 210. The heat exchanger 204 is provided inside a hot water storage tank 212. As a result, the heat from the exhaust gases passes out through the plates 218 and into contact with the water in the gaps 214. The water here is heated and rises because of the density change which results. As a consequence there is a general upflow of hot water through the gaps 214 between the heat exchanger plates 208 into the upper part 216 of the hot water storage tank 212. There is a general downward flow from the upper part 216 of the hot water storage tank 212 to the lower part 218 of the storage tank 212 at the sides of the hot water storage tank 212. As a consequence heat from the exhaust gases is gradually transferred to the water within the hot water storage tank 212 and the temperature level therein builds.

This arrangement captures a substantial part of the heat released into the environment in the exhaust gases otherwise. The exhaust gases on leaving the boiler 202 may have a temperature of approximately 80°C whereas the exhaust gases leaving the heat exchanger unit are reduced down to 20 to 40°C. As previously mentioned, this can substantially reduce or even eliminate the issue of "pluming". Additionally, the heat is captured from the exhaust gases into the hot water storage tank 212 during both hot water generation mode, during which time the boiler is on full power, and when just in heating mode, when a substantially lower power is applied. This means that hot water gradually accumulates within the hot water storage tank 212 during any use of the boiler and a boost to the heating of the water is provided when the boiler 202 is in hot water generation mode.

A substantial advantage of positioning the hot water storage tanks 212 in this position is that the temperature variation within the tank 212 cause natural circulation of the water and so there is no need to pump the water. The attendant cost and complexity of the pump is eliminated.

Whilst a significant body of hot water will build up in the hot water storage tank 212 over time with such a system, there may be occasion for which that hot water had been depleted and/or where further hot water is required and the temperature within that hot water storage tank 212 is not sufficient. In these circumstances, cold water is supplied to the boiler 202 and is heated upon demand before flowing to the domestic hot water outlet 220.

Whilst the common unit 200 may have the orientation shown within Figure 4, it is perfectly possible for that orientation to be inverted with the hot water storage tank 212 being provided below the boiler 202 and with the gases being drawn out through exhaust 206 at the bottom of the boiler. Such an arrangement allows substantially larger hot water storage tank 212 to be provided, as the available space below the boiler 202 is much greater than above it, in most domestic installations.

A temperature sensor is frequently provided at a location 222 so as to monitor the exhaust gas temperature leaving the boiler 202. This acts as a safeguard to prevent overheating of the boiler 202 and its component parts. This sensor 222 can also be used to protect the heat exchanger 204 against overheating should the exhaust gases rise to too high a temperature.

Also shown in the embodiment of Figure 4 is a further system which is entirely optional to the features of Figure 4 previously described. This part of the system includes a pre-heating cold water feed inlet 224 which receives at least part of the cold water feed from the main or header tank supplied to the system. The water enters through this pre-heating cold water inlet 224 and passes through the coils of a cold water pre-heating heat exchanger 226 before exiting through a pre-heating cold water outlet 228. This outlet 228 is connected to the cold water feed 230 into the boiler 202. The cold water pre-heating heat exchanger 226 is submersed within the water of the hot water storage tank 212. As a consequence, heat from the water within this tank 212, which may be 40°C, is conveyed into the cold water passing through the cold water pre-heating heat exchanger 226, which cold water may be between 4 and 15°C. As a result, this water is pre-heated and the extent of heating required in the boiler 202 to raise it to the relevant hot water temperature is reduced. This is another use to which the heat recovered from the exhaust gases is put. Additionally, the structure provided in Figure 4 achieves additional benefit from this feature. As well as promoting pre-heating of the cold water feed to the boiler 202, this pre-heating heat exchanger 226 removes heat from within the hot water storage tank 212 at its top. This helps promote temperature differentials within the hot water storage tank 212 which promotes the correct circulation of water through the heat exchanger 204 and the gaps 214 between its plates 208. As a consequence, greater circulation and more even distribution of the heat within the hot water storage tank 212 is achieved.

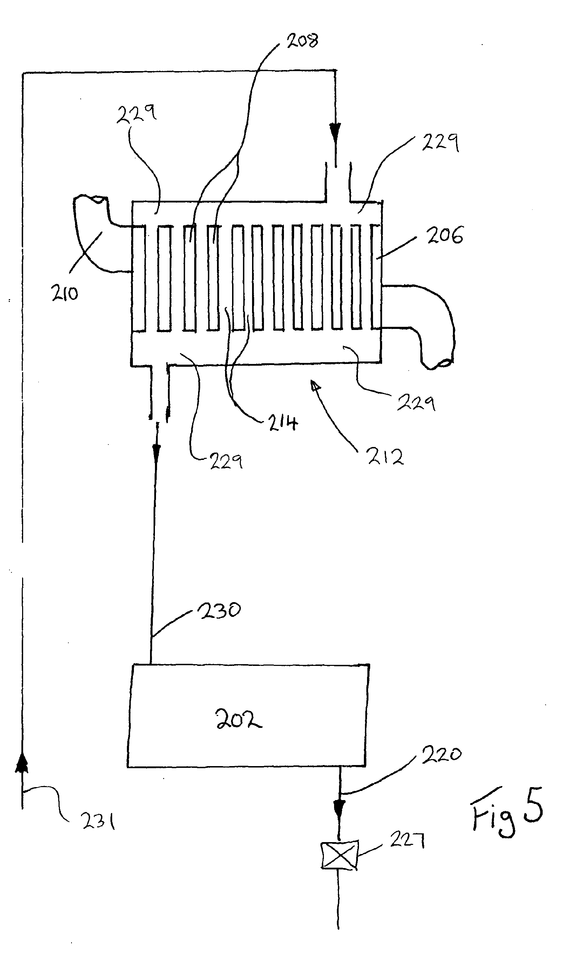

In the variation of Figure 5, the boiler 202 generates exhaust fumes, as before. These fumes enter the heat exchanger 206 and pass through the plates 208, before exiting via exhaust 210. As the hot fumes pass through the heat exchanger 206 the heat conducts through the plates 208 and into the water in the gaps 214 between the plates 208.

In the heating mode, no water is passing through the heat exchanger 206 and valve 227 is closed. The water within the gaps 214 is heated and is able to circulate into the volumes 229 which form the hot water storage tank 212. The volumes 229 may include volumes to the sides and/or in front of and/or behind the heat exchanger 206 too. As time passes since the heating mode started, the temperature of the water within the hot water storage tank 212 builds up.

When the system switches to hot water mode, the valve 227 is opened to allow the flow of water through the system to the location of use. This results in the hot water in the hot water storage tank 212 flowing through the water feed 230 into the boiler 202 and then through hot water outlet 220 to the location of use. If the system has been in heating mode for a reasonable period, the hot water within the hot water storage tank may be hot enough that little or no further heating within the boiler 202 is required. Cold water from a mains or header tank supply enters the system through cold water inlet 231 to replace the water leaving. With time, this will displace the hot water from the hot water storage tank 212. Even so, the passage of the cold water through the heat exchanger 206 will result in its warming. As the warmed water reaches the boiler 202, the additional heating provided by the boiler will raise the temperature of this water to the desired level.

Thus in the heating mode, hot water builds up in the hot water storage tank 212. This hot water is used in the initial part of the hot water mode, with further heating of the cold water by the heat exchanger 206 and boiler 202 in series.

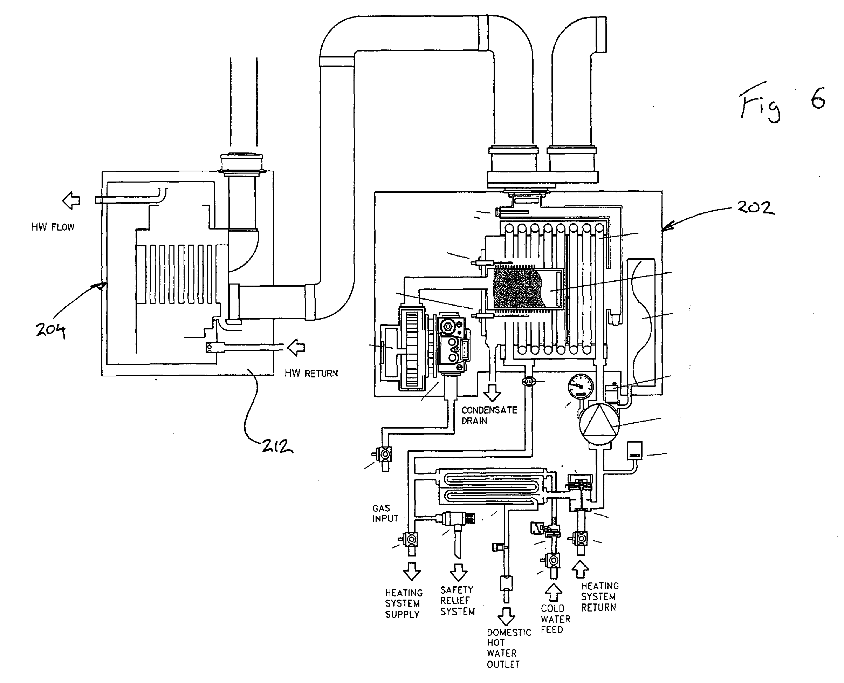

In the embodiment of the invention shown in Figure 6, an alternative position for the heat exchanger 204 within its hot water storage tank 212 is provided to the side of the boiler 202. Such an arrangement has advantages where head space above the boiler 202 is limited and potentially assists in using gravity to move water around the system.

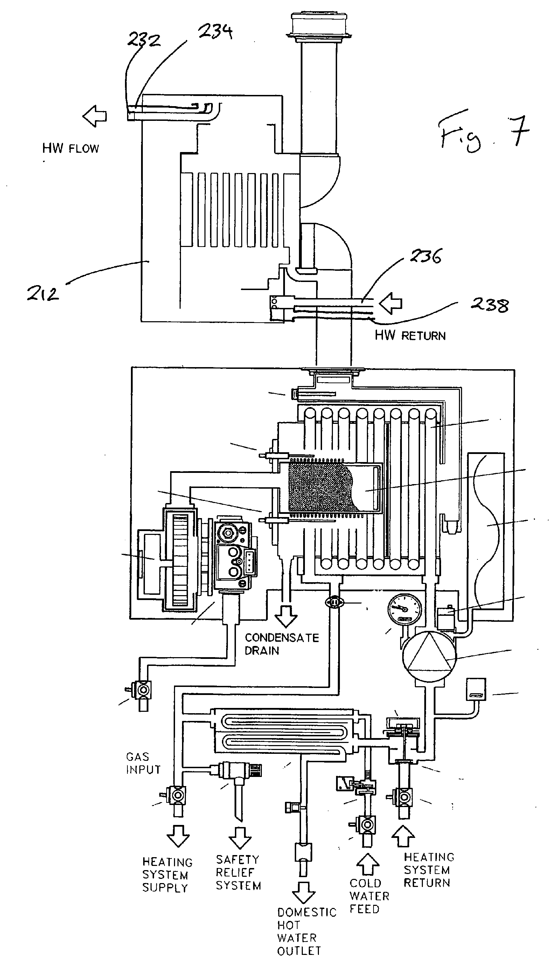

The heating of the hot water within the hot water storage tank 212 can occur to a sufficient extent for it to be viable to introduce this into the heating system, rather than hot water system, without detrimental impact. Figure 7 shows an embodiment of the invention which incorporates such a configuration. To do so, the hot water storage tank 212 is provided with a hot water withdrawal outlet 232 and a heating water withdrawal outlet 234. Hot water return pipe 236 and heating water return pipe 238 are also provided at the bottom of the hot water storage tank 212. Facility to remove any gas in the hot water storage tank 212 and/or from the water removed into heating system would be beneficial in some cases. A thermostat can be provided to control the occasions on which water is able to be drawn from the hot water storage tank 212 into the heating system, compared with occasions when it will not be appropriate because the water temperature within the hot water storage tank 212 is insufficient.

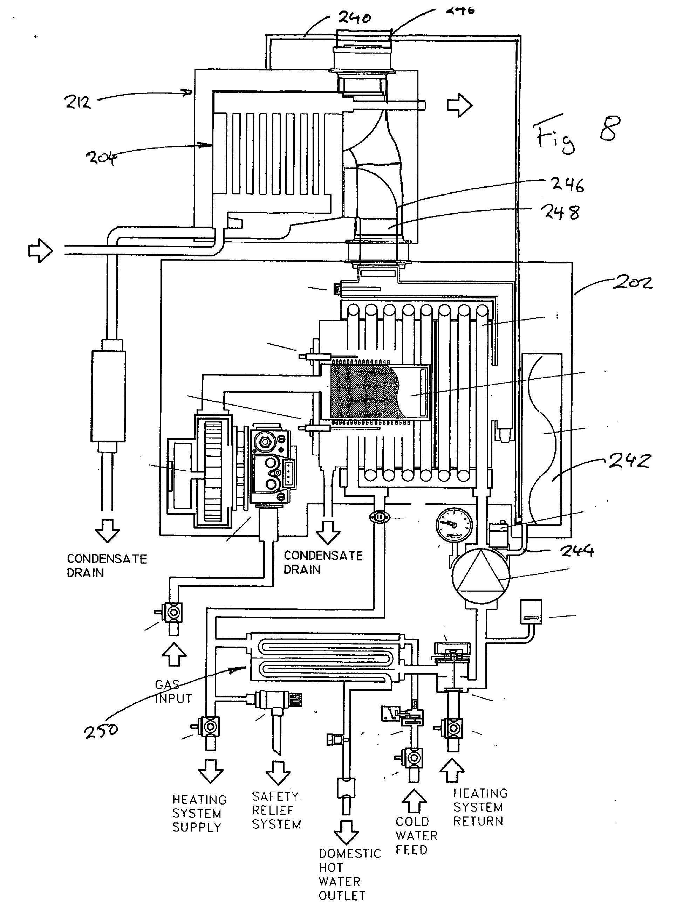

It is possible to provide the heat exchanger 204 with an air vent so as to accommodate any undesired expansion within the heat exchanger circulation system. In the alternative embodiment illustrated in Figure 8, however, the heat exchanger 204 is incorporated into the heating system to a limited extent. Whilst circulation of the heating water through the heat exchanger 204 is not provided, the bypass pipe 240 allows any increase in pressure within the heat exchanger 204 and hot water storage tank 212 to be accommodated by the flow of water along the pipe 240 and into the expansion vessel 242 associated with the heating system through pipe 244. Dual use of an existing expansion vessel 242 is therefore made with reduced component costs as a result.

Figure 8 also illustrates a completely independent option for the system relating to the pre-heating of air entering the boiler 202. In this case, air enters the unit 200 via an inlet passage 246 concentrically mounted around the exhaust 248. The air flows down through this passage 246 which passes through the hot water within the hot water storage tank 212 and then enters the boiler 202. A relatively straight passage 246 is shown in Figure 8, but a convoluted passage or passages can be used to increase the heat transfer surface. As a result of this contact with hot water, the temperature of the air reaching the boiler 202 is increased and this increases the overall efficiency of the boiler 202. On a cold day, such contact can add potentially 20° to the temperature of the air reaching the boiler.

In a further embodiment of the invention, not shown, hot water from within the hot water storage tank 212 can be pumped so as to contribute to the cold water feed heat exchanger 250 provided with a cold water feed into the boiler 202.

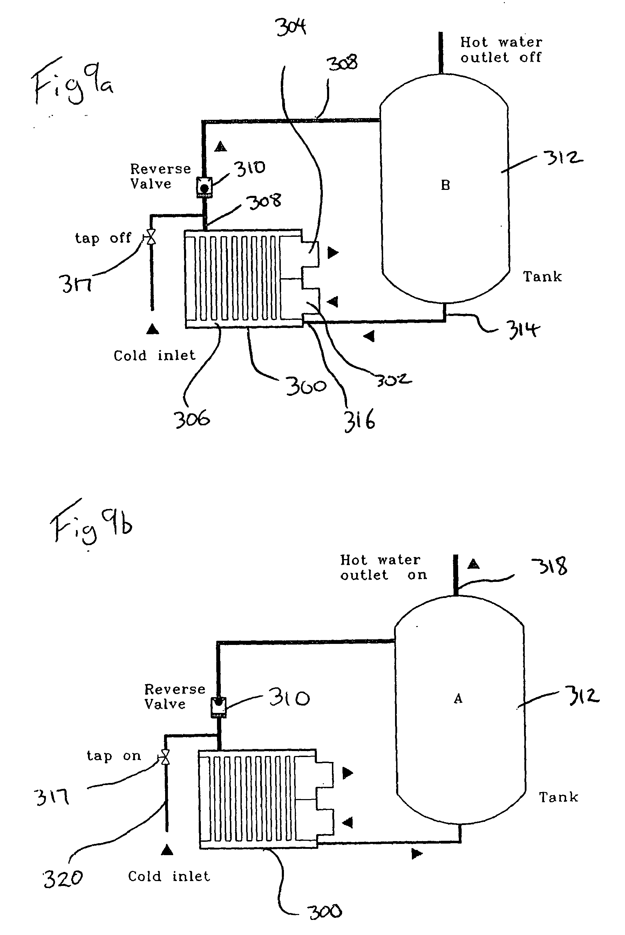

In the embodiment of Figure 9a and 9b an alternative approach for the recovery of useful energy from the exhaust gases is provided.

In this case, the heat exchanger 300 is provided with an exhaust gas inlet 302 to introduce hot exhaust gases from the boiler, not shown, and an exhaust gas outlet 304 to then lead the cooler exhaust gases out of the heat exchanger 300. As a result, heat is transferred to the water provided in the space 306 within the heat exchanger 300.

In Figure 9a, the system is shown in heating mode. As a consequence, the boiler is operating with a low flame and the temperature of the exhaust gases is lower than in hot water heating mode. The water within the heat exchanger 300 is heated by the exhaust gases and its density decreases. This causes it to rise and leave the upper passageway 308 out of the heat exchanger 300, through flow rate sensitive directional valve 310 and into the upper mid section of the hot water storage tank 312. The flow path is completed by cooler water leaving the hot water storage tank 312 through a bottom passageway 314 and hence back into the lower passageway 316 in the heat exchanger 300. The cold water feed is prevented in this mode. The water continuously recirculates through the system, clockwise in Figure 9a, and so builds up the volume of heated water within the hot water storage tank 312.

When hot water is needed, the system switches to hot water mode and assumes the form shown in Figure 9b. In this situation, the hot water is drawn off from the hot water storage tank 312 through the hot water outlet 318 and off to the location of use, direct or via the combi boiler 322. The water removed is replaced by cold water entering via the cold water feed and so allowing cold water in through cold water feed pipe 320. This cold water is under pressure, either from mains pressure or a header tank, not shown, and this pressure causes the flow rate sensitive directional valve 310 to move to a closed position. This prevents the cold water flowing into the upper mid section of the hot water storage tank and instead reverses the flow direction in the system. The cold water flows through upper passageway 308 into the top of the heat exchanger 300, down through the heat exchanger 300 and out through lower passageway 316 and on to the bottom passageway 314 of the hot water storage tank 312. As a result, the replacement cold water does not disrupt the hot water position within the hot water storage tank 312 and allows that hot water to be drawn off first.

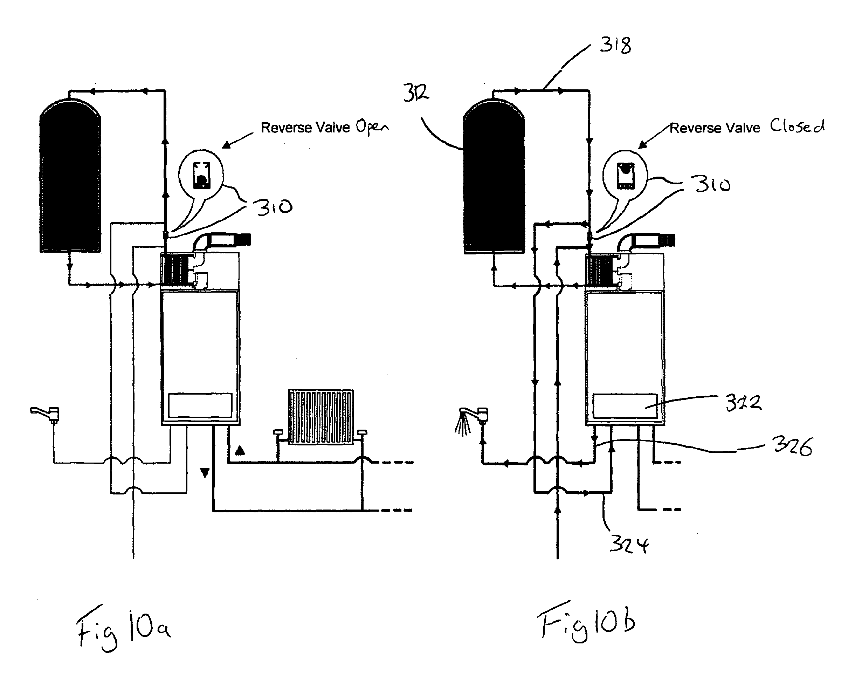

The hot water storage tank 312 can continue to supply the hot water until the volume of hot water it possesses is exhausted. It is possible for the boiler to directly heat water for immediate supply from thereon. Such an approach is shown in Figure 10a and particularly the hot water mode arrangement of Figure 10b. The hot water leaves the hot water storage tank 312 through the hot water outlet 318 and off to the location of use via the combi boiler 322. The hot water is fed into the combi boiler 322 through boiler inlet 324, is directly heated by the flames within the combi boiler 322 and exits through boiler outlet 326 and hence on to the location of use. The combi boiler 322 can be used to heat the hot water from the hot water storage tank 312, as necessary, and particularly after the hot water from the hot water storage tank 312 has been exhausted.

Once the demand for hot water is removed, no hot water flows from hot water outlet 318 and the cold water feed is prevented. The removal of the pressure of the cold water results in the flow sensitive directional valve 310 opening and allowing circulation of the water through the heat exchanger 300 and into the upper mid section of the hot water storage tank 312 to reestablish.

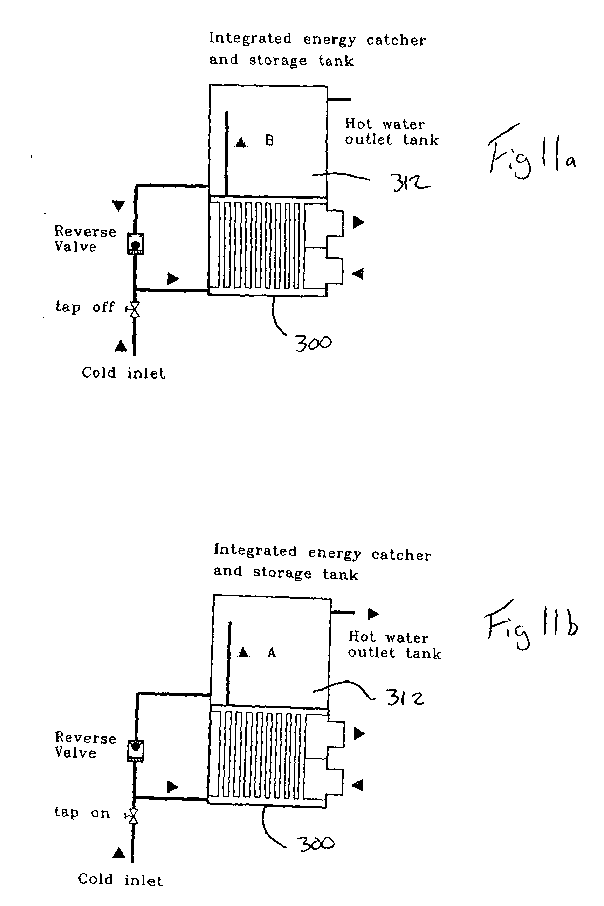

In the Figure 11a and 11b embodiment of the invention, a substantially similar system to that provided in Figure 9a and 9b is provided. Figure 11a shows the heating mode operation and Figure 11b the hot water mode operation.

The hot water storage tank 312 in this case is positioned directly above the heat exchanger 300.

It is possible to control of the direction of circulation of the water through the heat exchanger 300 to the hot water storage tank 312 in the Figure 8a, 8b, 9a, 9b, 10a, 10b, 11 a and 11b embodiments by mechanically or electronically switching the valve 310 at the relevant point of switching between heating mode and hot water mode and vice versa.

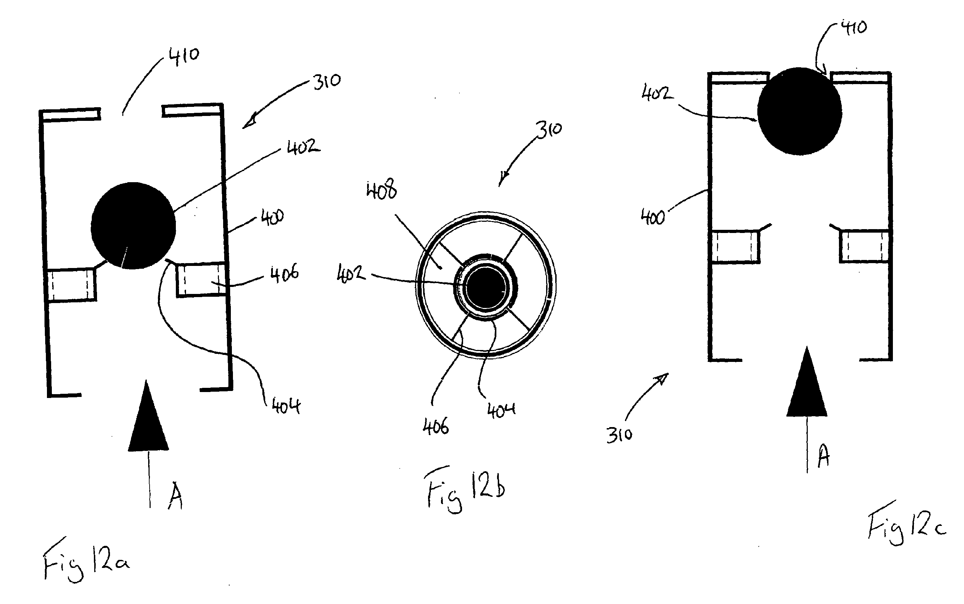

The use of a flow rate sensitive directional valve 310 has advantages in terms of its simplicity and hence cost. Such a valve 310 is illustrated in Figures 12a, 12b and 12c.

The valve 310 is formed of a chamber 400 in which a ball 402 of lower cross-sectional area is provided. The ball 402 has a density greater than water.

In the valve 310 open, heating mode state of Figure 12a, there is a flow in the direction of arrow A. However, the flow rate arising from the circulation of water between heat exchanger 300 and hot water storage tank 312 due to density differences is low. Hence, the flow rate is insufficient to lift the ball 402 against the effect of gravity to sufficient extent to put the valve 310 in the closed, hot water mode state of Figure 12c. The lift exerted on the ball 402 due to flow is less than the effect of gravity on the ball 402.

In the open state, as shown in Figure 12a and 12b, the ball 402 rests on a rim 404 formed by a protrusion from a spacer 406. The spacer 406 is in the form of four arms which span the radius of the chamber 4, but leave significant apertures 408 which allows circulation of the hot water past the ball 402 and hence through the valve 310 in the heating mode.

When the system switches from heating mode to the hot water mode the pressure increases due to the introduction of the cold water. The attempted flow rate in the direction of arrow A, Figure 12c, is much higher in this mode. The lift provided by the flow now exceeds the effect of gravity and the ball 402 is lifted up and forced against the outlet aperture 410. This results in the closure of the valve 310 and the prevention of cold water flow through the valve 310 and into the upper mid section of the hot water storage tank 312. Instead, the cold water flows through the heat exchanger and into the bottom of the hot water storage tank 312.

When the system switches back to heating mode, the cold water pressure and attempted flow is removed and the ball 402 drops back under the force of gravity and reopens the valve 310. Recirculation of the water is thus reestablished.

Because the ball 402 has a point contact between it and the aperture 410 in the closed position, the chances of dirt interfering with the seal are reduced. Additionally, the ball rotates in use and is hence self cleaning. It should also be noted that the seal does not need to be fully effective in the hot water mode for the invention to work. Some leakage of cold water past the seal is acceptable.

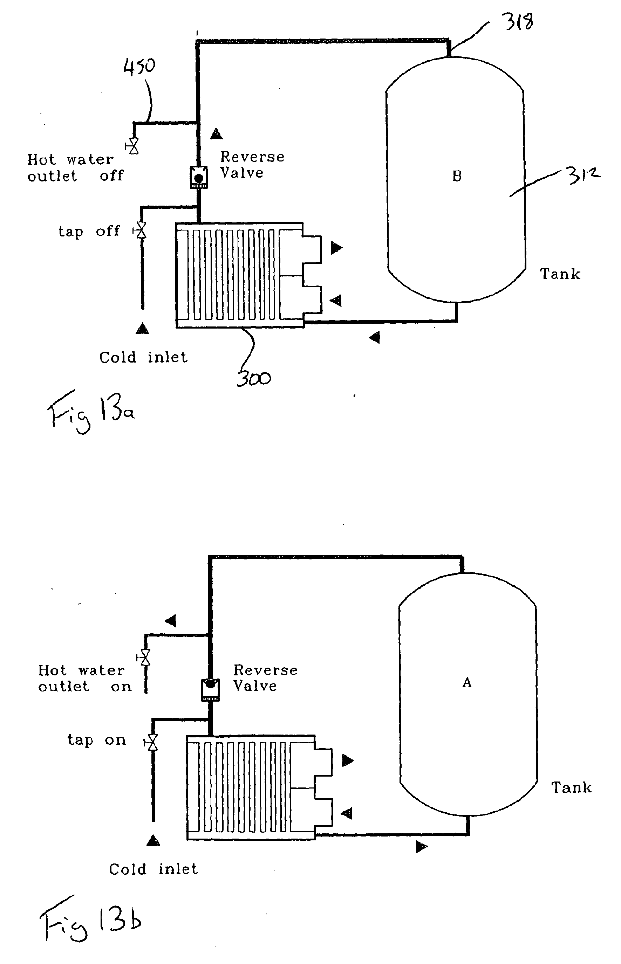

In the embodiments of Figures 13a and 13b, the heating mode operation is shown in Figure 13a and the hot water mode operation in Figure 13b.

In this form, the hot water from the heat exchanger 300 rises through the valve 310 as before. However, it is fed into the top of the hot water storage tank 312 via a passageway 318 which also serves as the hot water outlet 318 when the system switches to hot water mode. As hot water is fed to the hot water storage tank 312, the boundary between the hot water and the cold water moves down the hot water storage tank 312. Cold water is drawn off from the bottom of the hot water storage tank 312 and fed to the heat exchanger 300 as before.

When hot water mode is entered, the valve 310 is shut and cold water passes through the heat exchanger 300, into the bottom of the hot water storage tank 312, so as to displace hot water out of the outlet 318 and onto the passage 450 leading to the location of use for the hot water, either direct or via the combi boiler for further heating.

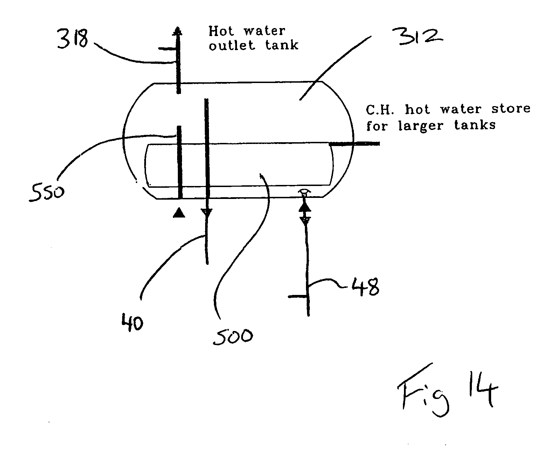

In the embodiment of Figure 14, an alternative construction for a hot water storage tank 312 is shown. The hot water storage tank 312 includes a second water tank 500. This second water tank is connected to the heating system by pipe 502 and hence is pressurised to 1.5bar along with the heating system. Expansion and contraction in the water in the second water tank 500 is accommodated by means of the pipe 502 and the expansion and contraction capacity of the heating system. There is no flow of water through the second water tank 500, nor any substantial heat flow from the heating system into the second water tank 500.

When hot water is required, this is drawn off from the hot water storage tank 312 via the hot water outlet 318 to the location of use. Cold water to replace the hot water drawn off enters the bottom of the hot water storage tank 312 via cold water feed pipe 48.

The hot water arises within the hot water storage tank through a variety of mechanisms.

Firstly, the water can be drawn off through boiler feed pipe 40, feed to the boiler, not shown, heated during the heating mode of the system and returned to the hot water storage tank 312, for instance via outlet 318.

Secondly, water heated in the heat exchanger by the exhaust gases in heating mode and/or in hot water mode can be returned to the hot water storage tank 312 via passage 550 and cold water can be drawn out through cold water feed pipe 48 to complete the circuit. This allows heat from the exhaust gases to be recovered into the hot water storage tank.

Thirdly, if the first and/or second mechanisms lead to a large volume of hot water within the storage tank 312, that hot water will partially or completely surround the second water tank 500. This will lead to transfer of heat into the water in the second water tank 500 from the water of the hot water storage tank 312. If the hot water in the hot water storage tank 312 is drawn off, the cold water that replaces it will surround the second water tank 500. The hot water within the second water tank 500 is prevented from being drawn off and so is available to start heating the cold water replacement immediately. This allows the system to recover an provide useful hot water faster than if all the hot water were drawn off. In effect a buffer of hot water is provided within the hot water storage tank 312 by the second water tank 500.

One, two or all three mechanisms will contribute to the heating of the water available for use. In hot water mode, direct heating of the water for immediate use may also occur.

During approximately 4 months of the year, the heating mode for a house may not be in use. As and when the hot water mode is activated, however, the exhaust gases are still used in the heat exchanger to recover heat which is conveyed as hot water passing into the storage tank 312.

In an embodiment of the invention, not shown, it is possible to provide two or more heat exchangers through which the exhaust gases pass and from which heat is recovered. The heat exchangers may be in series as far as the passage of exhaust gases is provided. The heat exchangers may be in parallel or series as far as the passage of water through them for heating is concerned. The water and exhaust gases may flow in a countercurrent arrangement. The water heated by the two or more heat exchangers may be used for the same purpose or one or more of the heat exchangers may provide its hot water for a different purpose to one or more of the other heat exchangers.

In a further embodiment of the invention, not shown, the heated water obtained from the exhaust gas heat exchanger(s) can be directly or indirectly used in an underfloor heating system.

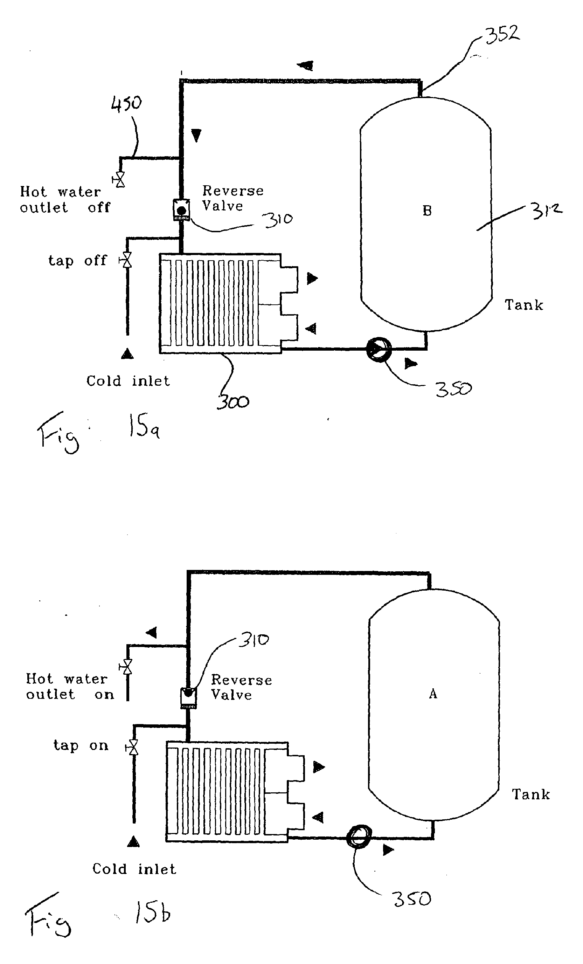

In a still further embodiment of the invention shown in Figure 15a and 15b, the heating mode operation is shown in Figure 15a and the hot water mode operation in Figure 15b.

In this form, the water within the heat exchanger 300 is heated by the passage of the exhaust fumes. This heating occurs during heating mode. The hot water from the heat exchanger 300 is pumped by a pump 350 from the bottom of the heat exchanger 300 into the bottom of the hot water storage tank 312. The water circulation continues round the circuit along passageway 352, through the open valve 310 and into the top of the heat exchanger 300. Further heating of the water then occurs as the water passes round and round the circuit.

The active pumping of the water through the circuit gives a lower contact time between the heat exchanger and the water on each pass and so maximises the temperature difference between the water and the heat exchanger. As a result heat transfer is maximised. The greatest level of heat is retained by the water and the greatest cooling of the exhaust fumes is provided.

In the gravity system, the water needs to be heated to a reasonable temperature before the density differences come into effect.

Once hot water is needed, the hot water outlet 450 is opened and the pump 350 is placed in a state which is not restricting to flow through it. As a result, the pressure from the cold water inlet is applied to the system and results in the valve 310 closing. This causes water to flow into the top of the heat exchanger 300 and out through the bottom. During te passage of the water, heat transfer occurs and the level of the heat transfer is maintained as this is cold water passing. The water then passes through the passive pump 350 and into the bottom of the hot water storage tank 312. This displaces hot water out of the passageway 352 and onto the passage 450 leading to the location of use for the hot water. This passage may be direct or may be made via the combi boiler for further heating of the water.

## Claims

1. A water heating system, the water heating system including:
a burner unit, the burner unit having an exhaust gas outlet, the exhaust gas outlet passing through a heat exchanger;
a hot water storage tank, the hot water storage tank being in a heat transfer circuit with the exhaust gases of the heat exchanger.

2. A water heating system according to claim 1, in which the burner has a water heating mode and a space heating mode and the water of the hot water storage tank is heated during the water heating mode and during the space heating mode.

3. A water heating system according to claim 1 or claim 2, in which a cold water inlet is connected to the hot water storage tank, the burner unit is connected to a hot water outlet and when water flows from one or more outlets from the water heating system, water flows from the hot water storage tank to the burner unit.

4. A water heating system according to claim 3 , in which water flows into the hot water storage tank through the cold water feed inlet when water is removed from the water heating system via one or more of the outlets.

5. A water heating system according to any preceding claim, in which the water heating system includes the hot water storage tank having a water outlet passage leading to a heat transfer passage in the heat exchanger, the heat transfer passage leading to a water inlet in the hot water storage tank.

6. A water heating system according to any preceding claim, in which the cold water feed to the hot water storage tank is connected to the hot water storage tank through the heat exchanger and/or the system includes a valve, the valve having a first state which allows the connection of the cold water feed to the hot water storage tank through the heat exchanger.

7. A water heating system according to any preceding claim, in which the system includes a valve, the valve having a second state which allows the connection of the water outlet of the hot water storage tank to the water inlet of the hot water storage tank through the heat exchanger.

8. A water heating system according to claim 6 and claim 7, in which the valve is in the first state during the water heating mode and the valve is in the second state during the space heating mode.

9. A water heating system according to any preceding claim in which a pump is provided and the pump circulates water through the heat exchanger and hot water storage tank during the space heating mode.

10. A water heating system according to any preceding claim in which the water outlet leading from the hot water storage tank to the heat exchanger is connected at the top of the hot water storage tank and the water inlet leading from the heat exchanger to the hot water storage tank is connected to the bottom of the hot water storage tank.

11. A water heating system according to any preceding claim in which the flow of water through the heat exchanger and/or through the hot water storage tank is in the same direction in the space heating mode and in the water heating mode.

12. A water heating system according to any preceding claim, in which the water inlet of the hot water storage tank leading from the heat exchanger to the hot water storage tank is, at least in part, a common passage with the hot water outlet of the hot water storage tank leading from the hot water storage tank to the locations of use.

13. A water heating system, according to any of claims 1 to 4, in which the water heating system includes the heat exchanger being at least partially within the hot water storage tank.

14. A water heating system according to claim 13, in which the hot water storage tank stores hot water only generated by the heat exchanger and/or the heat exchanger is provided within the hot water storage tank.

15. A water heating system according to claim 13 or claim 14 in which the water of the hot water storage tank is provided in contact with the bottom of the heat exchanger and water of the hot water storage tank is provided in contact with the top of the heat exchanger.
